(19) Europäisches Patentamt
European Patent Office
Office européen des brevets

(11) **EP 4 386 663 A1**

(12) **EUROPEAN PATENT APPLICATION**

(43) Date of publication:
**19.06.2024 Bulletin 2024/25**

(21) Application number: **23209683.4**

(22) Date of filing: **14.11.2023**

(51) International Patent Classification (IPC):
**G06T 7/00** (2017.01)    **B65H 69/06** (2006.01)

(52) Cooperative Patent Classification (CPC):
**G06T 7/0004; B65H 63/00;** B65H 2701/31;
G06T 2207/20081; G06T 2207/20084;
G06T 2207/30164

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022   JP 2022201334
27.06.2023   JP 2023104893**

(71) Applicant: **TMT Machinery, Inc.
Osaka-shi, Osaka 541-0041 (JP)**

(72) Inventor: **Yoshida, Kazuto
Kyoto-shi, Kyoto, 612-8686 (JP)**

(74) Representative: **Grünecker Patent- und
Rechtsanwälte
PartG mbB
Leopoldstraße 4
80802 München (DE)**

(54) **MOUNTING STATE DETECTION DEVICE**

(57)    Provided is a mounting state detection device (10) capable of accurately determining whether or not a mounting state of a bobbin is appropriate. The mounting state detection device (10) includes a control device (50) and an imaging device (61) configured to be able to image a bobbin mounted on a bobbin holder of a thread winding machine. The control device (50) executes processing for acquiring an estimation model (124) generated by performing machine learning of a plurality of pieces of training data (123). Each of the plurality of pieces of training data (123) associates a training bobbin image showing the bobbin with mounting state information representing a mounting state of a bobbin, as a label. The control device (50) further executes processing for acquiring a determination bobbin image from the imaging device (61) by imaging the bobbin mounted on the bobbin holder, and processing for determining whether or not the bobbin is mounted normally on the bobbin holder based on the mounting state information output from the estimation model (124) by inputting the determination bobbin image to the estimation model (124).

FIG.1

EP 4 386 663 A1

## Description

TECHNICAL FIELD

The present invention mainly relates to a device for detecting a mounting state of a bobbin on a bobbin holder.

BACKGROUND ART

Japanese Utility Model Laid-Open No. H4-97769 (Patent Document 1) discloses a winding machine, a cart, and a paper tube supply device. Two winding machines are arranged side by side. The winding machine winds thread to produce a package. The cart pushes and sets a paper tube on each of the two winding machines. The paper tube supply device supplies the paper tubes to the cart. The paper tube supply device determines the type of paper tube and the direction of the paper tube by detecting a position of a slit of the paper tube using a photoelectric sensor.

Japanese Utility Model Laid-Open No. H4-97769 is an example of related art.

A method of detecting a slit in a paper tube using a photoelectric sensor as in Patent Document 1 may result in erroneous detection due to, for example, unevenness of the paper tube, a gap between paper tubes, foreign matter, and the like. In addition to slit detection, erroneous detection may also similarly occur when detecting various events related to the bobbin mounting state, such as the size of a gap between bobbins. Accordingly, there has been demand for a configuration according to which it is possible to accurately determine whether or not the mounting state of a bobbin is appropriate.

The present disclosure has been made in view of the above circumstances, and a main object thereof is to provide a mounting state detection device, a mounting state detection method, and a mounting state detection program capable of accurately determining whether or not the mounting state of the bobbin is appropriate.

SUMMARY OF THE INVENTION

In one example of the present disclosure, a mounting state detection device is provided. The mounting state detection device includes a control device and an imaging device configured to be able to image a bobbin mounted on a bobbin holder of a thread winding machine. The control device executes processing for acquiring an estimation model generated by performing machine learning of a plurality of pieces of training data. Each of the plurality of pieces of training data associates a training bobbin image showing a bobbin with mounting state information representing a mounting state of the bobbin, as a label. The control device further executes processing for acquiring a determination bobbin image from the imaging device by imaging the bobbin mounted on the bobbin holder, and processing for determining whether or not the bobbin is mounted normally on the bobbin holder based on the mounting state information output from the estimation model by inputting the determination bobbin image to the estimation model.

This mounting state detection device uses an estimation model that has learned a relationship between the training bobbin image and the mounting state information. As a result, the mounting state detection device can acquire the mounting state information of the bobbin by inputting the determination bobbin image to the estimation model, and can determine the mounting state of the bobbin.

In one example of the present disclosure, in the determining processing, a determination is made regarding whether or not a mounting orientation of the bobbin on the bobbin holder is normal.

Thus, the mounting state detection device can detect a specific mounting abnormality of the bobbin.

In one example of the present disclosure, a slit is formed in the bobbin. The mounting state information serving as the label includes a bobbin range indicating a range of a bobbin in the training bobbin image and a slit range indicating a range of a slit in the training bobbin image. The estimation model receives input of the determination bobbin image and outputs the bobbin range in the determination bobbin image and the slit range in the determination bobbin image as mounting state information. A determination is made regarding whether or not the mounting orientation is normal based on a positional relationship between the bobbin range and the slit range output from the estimation model.

By focusing on the positional relationship between the bobbin range and the slit range in the bobbin image, the mounting state detection device can more accurately determine whether or not the mounting orientation of the bobbin on the bobbin holder is normal.

In one example of the present disclosure, a plurality of bobbins are arranged side by side on the bobbin holder. In the determining processing, a determination is made regarding whether or not an interval between the bobbins included in the determination bobbin image is normal.

Thus, the mounting state detection device can detect a specific mounting abnormality of the bobbins.

In one example of the present disclosure, the mounting state information serving as the label includes a bobbin range indicating a range of a bobbin in the training bobbin image. The estimation model receives input of the determination bobbin image and outputs the bobbin range for each bobbin included in the determination bobbin image. A determination is made regarding whether or not the interval is normal based on the positional relationship between adjacent bobbin ranges among the bobbin ranges output from the estimation model.

The mounting state detection device can more accurately determine whether or not the interval between adjacent bobbins is normal by focusing on an interval between the bobbin ranges in the bobbin image.

In one example of the present disclosure, the control device further executes processing for performing notification of a mounting abnormality of the bobbin if it is determined that the bobbin is not mounted normally on the bobbin holder.

Thus, the mounting state detection device can inform an operator of the abnormality in the mounting state of the bobbin.

In one example of the present disclosure, the imaging device images the bobbin after the start of a task of mounting the bobbin on the bobbin holder and before the start of thread winding by the thread winding machine.

As a result, the mounting state detection device can determine the mounting state of the bobbin before a problem occurs due to incorrect mounting of the bobbin.

In one example of the present disclosure, a plurality of the bobbins are arranged side by side on the bobbin holder. A plurality of the imaging devices are arranged along an axial direction of the bobbin holder. The imaging devices generate the determination bobbin image including one or more of the bobbins.

As a result, even if a plurality of bobbins are arranged side by side on the bobbin holder, the mounting states of these bobbins can be accurately detected by using a plurality of imaging devices.

In one example of the present disclosure, a plurality of the bobbins are arranged side by side on the bobbin holder. One imaging device generates the determination bobbin image including all of the bobbins.

As a result, even if a plurality of bobbins are arranged side by side on the bobbin holder, it is possible to accurately detect the mounting state of these bobbins while suppressing the number of imaging devices by using a wide-angle imaging device capable of imaging the plurality of bobbins together.

In one example of the present disclosure, a plurality of the bobbins are arranged side by side on the bobbin holder. The imaging device is configured to be able to travel along an axial direction of the bobbin holder. The imaging device travels after generating the determination bobbin image including one of the bobbins, and generates the determination bobbin image including another of the bobbins.

As a result, even if a plurality of bobbins are arranged side by side on the bobbin holder, it is possible to accurately detect the mounting states of the bobbins while suppressing the number of imaging devices by causing the imaging device to travel along the axial direction of the bobbin holder.

In an example of the present disclosure, a plurality of the bobbins are arranged side by side by inserting the bobbins from an insertion end of the bobbin holder and sliding the bobbins. The imaging device sequentially images the bobbins inserted from the insertion end to generate the determination bobbin images for all of the bobbins.

As a result, even if a plurality of bobbins are arranged side by side on the bobbin holder, it is possible to accurately detect the mounting states of these bobbins while suppressing the number of imaging devices by sequentially imaging the bobbins when the bobbins are inserted.

An example of the present disclosure includes a plurality of the imaging devices. The imaging devices image the bobbin from a plurality of directions. A determination is made regarding whether or not the bobbin is mounted normally on the bobbin holder based on a plurality of determination bobbin images imaged from a plurality of directions.

Since the determination is based on the result of imaging a wide range in the circumferential direction of the bobbin, detection accuracy can thus be increased.

In one example of the present disclosure, the imaging device generates a plurality of the determination bobbin images by imaging the bobbin a plurality of times while the bobbin rotates using an axial direction of the bobbin holder as a center of rotation. A determination is made regarding whether or not the bobbin is mounted normally on the bobbin holder based on the plurality of determination bobbin images.

Since the determination is based on the result of imaging the entire bobbin in the circumferential direction, detection accuracy can be increased.

In another example of the present disclosure, a mounting state detection method to be executed by a mounting state detection device is provided. The mounting state detection device includes an imaging device configured to be able to image a bobbin mounted on a bobbin holder of a thread winding machine. The mounting state detection method includes a step of acquiring an estimation model generated by performing machine learning of a plurality of pieces of training data. Each of the plurality of pieces of training data associates a training bobbin image showing a bobbin with mounting state information representing the mounting state of the bobbin, as a label. The mounting state detection method further includes a step of acquiring a determination bobbin image from the imaging device by imaging the bobbin mounted on the bobbin holder, and a step of determining whether or not the bobbin is mounted normally on the bobbin holder based on the mounting state information output from the estimation model by inputting the determination bobbin image to the estimation model.

This mounting state detection method uses an estimation model that has learned the relationship between the training bobbin image and the mounting state information. As a result, with the mounting state detection method, it is possible to acquire the mounting state information of the bobbin by inputting the determination bobbin image to the estimation model, and it is possible to determine the mounting state of the bobbin.

Another example of the present disclosure provides a mounting state detection program to be executed by a mounting state detection device. The mounting state detection device includes an imaging device configured to be able to image a bobbin mounted on a bobbin holder of a thread winding machine. The mounting state detection program causes the mounting state detection device to execute a step of acquiring an estimation model generated by performing machine learning of a plurality of pieces of training data. Each of the plurality of pieces of training data associates a training bobbin image showing a bobbin, with mounting state information representing the mounting state of the bobbin, as a label. The mounting state detection program further causes the mounting state detection device to execute a step of acquiring a determination bobbin image from the imaging device by imaging the bobbin mounted on the bobbin holder, and a step of determining whether or not the bobbin is mounted normally on the bobbin holder based on the mounting state information output from the estimation model by inputting the determination bobbin image to the estimation model.

This mounting state detection program uses an estimation model that has learned the relationship between the training bobbin image and the mounting state information. As a result, the mounting state detection program can acquire the mounting state information of the bobbin by inputting the determination bobbin image to the estimation model, and can determine the mounting state of the bobbin.

BRIEF DESCRIPTION OF THE DRAWINGS

FIG. 1 is a front view of a thread winding machine according to one embodiment.
FIG. 2 is a diagram showing a side view of a thread winding machine.
FIG. 3 is a diagram showing a block diagram of a thread winding machine.
FIG. 4 is a diagram showing a method for constructing an estimation model through machine learning.
FIG. 5 is a diagram showing a method for obtaining estimation data using an estimation model.
FIG. 6 is a diagram showing a diagram in which estimation results of an estimation model are superimposed on a bobbin image.
FIG. 7 is a diagram showing a flowchart for determining whether or not a bobbin mounting state is appropriate.
FIG. 8 is a diagram showing an example of a hardware configuration of a control device.
FIG. 9 is a diagram showing an example of a training data set.
FIG. 10 is a diagram showing an example of a functional configuration of a control device.
FIG. 11 is a diagram conceptually showing training processing performed by a training unit.
FIG. 12 is a diagram conceptually showing mounting state determination processing performed by a determination unit.
FIG. 13 is a diagram showing a device configuration of a mounting state determination system according to a second modified example.
FIG. 14 is a diagram showing an example of a training data set according to a third modified example.
FIG. 15 is a diagram conceptually showing training processing performed by a training unit according to the third modified example.
FIG. 16 is a diagram conceptually showing processing for determining a mounting abnormality performed by a determination unit according to the third modified example.
FIG. 17 is a diagram showing a side view of a thread winding machine according to a fourth modified example.
FIG. 18 is a diagram showing a side view of a thread winding machine according to a fifth modified example.
FIG. 19 is a diagram showing a side view of a thread winding machine according to a sixth modified example.
FIG. 20 is a diagram showing a front view of a thread winding machine according to a seventh modified example.

EMBODIMENTS OF THE INVENTION

Hereinafter, each embodiment according to the present invention will be described with reference to the drawings. In the following description, identical parts and constituent elements are denoted by identical reference numerals. Their names and functions are also the same. Accordingly, detailed description thereof will not be repeated. Note that each embodiment and modified example described below may also be selectively combined with each other as appropriate.

A. Overview

First, an overview of a mounting state detection device according to the embodiment will be described.
The mounting state detection device determines whether or not a bobbin is mounted normally, based on a bobbin image obtained from an imaging device by imaging the bobbin mounted on a bobbin holder of a thread winding machine. In order to realize such a determination function, first, the mounting state detection device acquires an estimation model generated by performing machine learning of a plurality of pieces of training data.
Each of the plurality of pieces of training data associates a training bobbin image showing a bobbin with mounting state information representing the mounting state of the bobbin as a label. The "mounting state information" in this context means information that can directly or indirectly specify the mounting state of the bobbin on the bobbin holder. Stated differently, the mounting state information is information that is correlated with the mounting state of the bobbin on the bobbin holder. A specific example of the mounting state information will be described later.

The mounting state detection device acquires a determination bobbin image from the imaging device by causing the imaging device to image the bobbin mounted on the bobbin holder, and inputs the determination bobbin image to the estimation model. Next, the mounting state detection device determines whether or not the bobbin is mounted normally on the bobbin holder based on the mounting state information output from the estimated model. As a result, the mounting state detection device can accurately determine the mounting state of the bobbin on the bobbin holder.

B. Thread Winding Machine 1

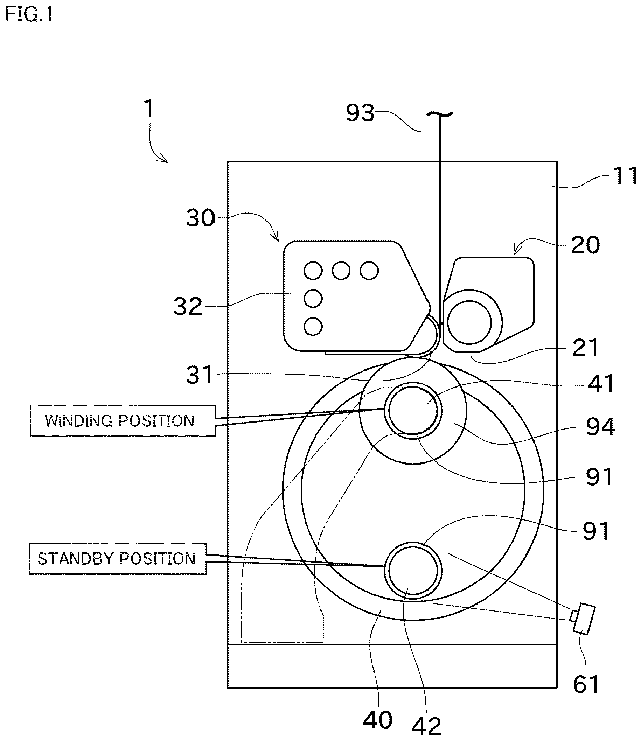

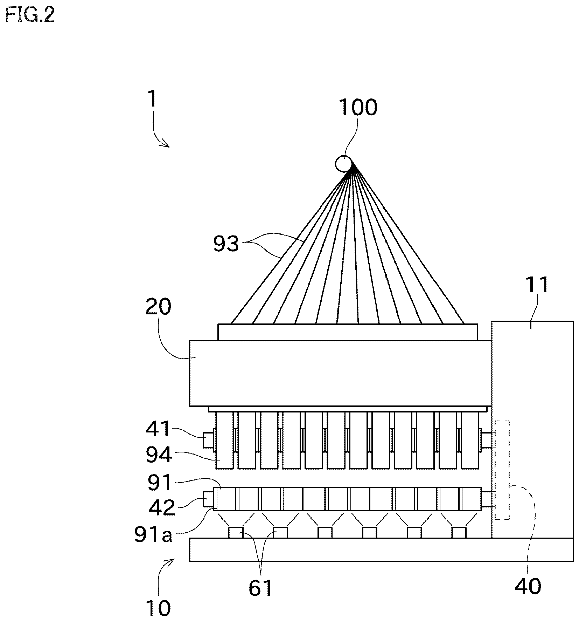

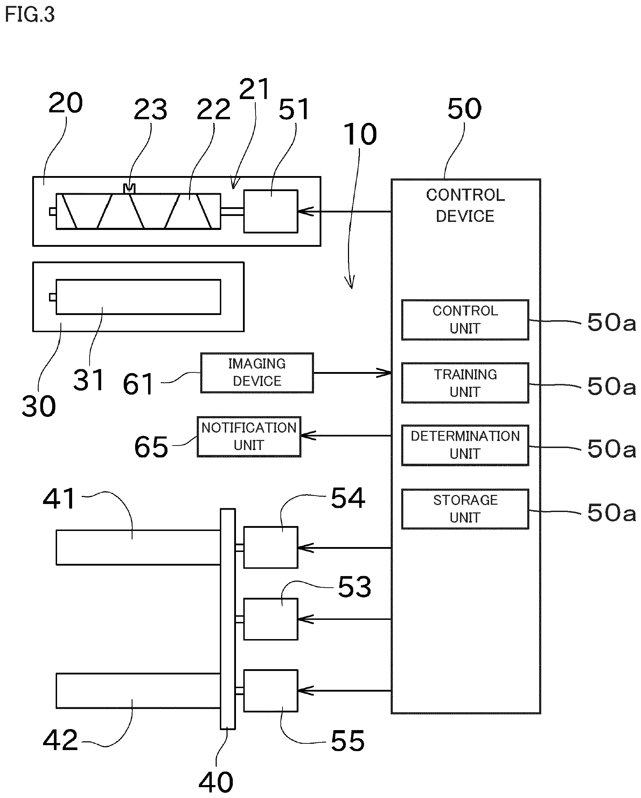

Next, an embodiment of the present disclosure will be described in further detail with reference to the drawings. FIG. 1 is a front view of a thread winding machine 1 according to an embodiment of the present disclosure. FIG. 2 is a side view of the thread winding machine 1. FIG. 3 is a block diagram of the thread winding machine 1. In the following description, upstream or downstream in the travel direction of the thread is simply referred to as upstream or downstream in some cases.

A spinning machine (not shown) is arranged upstream of the thread winding machine 1 shown in FIG. 1. The spinning machine produces a thread 93 and supplies the thread 93 to the thread winding machine 1. The thread winding machine 1 winds the thread 93 around a bobbin 91 to manufacture a package 94.

The bobbin 91 is a cylindrical member. As shown in FIG. 2, a slit 91a is formed in the bobbin 91. The slit 91a is a groove formed along a circumferential direction on the surface of the bobbin 91. The slit 91a may be formed over the entire circumference, or may be formed only partially in the circumferential direction. The slit 91a is formed at a position near one side in an axial direction of the bobbin 91. In other words, since the slit 91a has an asymmetrical shape with respect to the center in the axial direction, the bobbin 91 needs to be arranged in the correct mounting orientation.

As shown in FIG. 1, the package 94 is formed by winding the thread 93 on the bobbin 91 at an upper winding position to form a thread layer. On the other hand, the thread 93 is not wound on the bobbin 91 at a lower standby position. The thread 93 is a synthetic thread such as nylon or polyester, for example. The thread 93 may also be an elastic thread such as spandex.

Also, as shown in FIG. 2, in the present embodiment, a plurality of threads 93 arranged side by side in the axial direction of the first bobbin holder 41 (second bobbin holder 42) are supplied from a thread feed roller 100 to the thread winding machine 1 from the spinning machine. Also, a plurality of bobbins 91 are arranged side by side in the axial direction of the first bobbin holder 41 (second bobbin holder 42). The thread winding machine 1 winds a plurality of threads 93 onto the bobbins 91 to manufacture a plurality of packages 94. Hereinafter, a later-described turret plate 40 side in the axial direction of the first bobbin holder 41 (second bobbin holder 42) will be referred to as a second side, and the opposite side thereto will be referred to as a first side. If the bobbin 91 is arranged in the correct mounting orientation, the slit 91a is located on the first side.

Details of the thread winding machine 1 will be described below. As shown in FIG. 1, the thread winding machine 1 includes a frame 11, a first housing 20, a second housing 30, and a turret plate (bobbin holder moving mechanism) 40.

The frame 11 is a member that holds each part of the thread winding machine 1. The first housing 20 and the second housing 30 are mounted on the frame 11. The first housing 20 and the second housing 30 can move up and down with respect to the frame 11.

A traverse device 21 is attached to the first housing 20. The traverse device 21 causes the thread 93 fed downstream to perform a traversing motion by moving back and forth on the winding width of the package 94 along the axial direction of a later-described first bobbin holder 41 while a later-described traverse guide 23 engages with the thread 93. A thread layer is formed on the bobbin 91 or the package 94 by this traversing motion of the thread 93. As shown in FIG. 3, the traverse device 21 includes a traverse cam 22 and a traverse guide 23.

The traverse cam 22 is a roller-shaped member arranged parallel to the bobbin 91 or the package 94. A spiral cam groove is formed on the outer peripheral surface of the traverse cam 22. The traverse cam 22 is rotationally driven by a traverse motor 51.

The traverse motor 51 is controlled by a later-described control device 50. The traverse guide 23 is a part that engages with the thread 93. The leading end of the traverse guide 23 has, for example, a substantially U-shaped guide portion, which engages with the thread 93 so as to sandwich the thread 93 in the winding width direction. The base end of the traverse guide 23 is located in the cam groove of the traverse cam 22. With this configuration, by rotationally driving the traverse cam 22, the traverse guide 23 can be moved back and forth in the winding width direction.

A contact roller 31 is rotatably mounted on the second housing 30. When the thread 93 is wound, the contact roller 31 is driven to rotate while in contact with the thread layer of the package 94 with a predetermined pressure, whereby the thread 93 from the traverse guide 23 is fed to the thread layer of the package 94 and the thread layer shape of the package 94 is adjusted. Note that the contact roller 31 may be rotationally driven using a drive unit such as a motor.

An operation panel 32 is provided on the second housing 30. The operation panel 32 is a device operated by an operator. The operator gives instructions to the thread winding machine 1 by operating the operation panel 32. Instructions given by the operator include, for example, starting winding, stopping winding, and changing winding conditions.

The turret plate 40 is a disk-shaped member. The turret plate 40 is rotatably mounted on the frame 11. The turret plate 40 can rotate using a normal line passing through the center of the disk as a rotation axis. The turret plate 40 is rotationally driven by a turret motor 53 shown in FIG. 3. The turret motor 53 is controlled by the control device 50, which will be described later.

A first bobbin holder 41 and a second bobbin holder 42 are respectively provided at two locations on the turret plate 40 that oppose each other across the center of the disk. A plurality of bobbins 91 can be mounted side by side in the axial direction of the first bobbin holder 41 on the first bobbin holder 41. The plurality of bobbins 91 can be mounted side by side in the axial direction of the second bobbin holder 42 on the second bobbin holder 42. The positions of the first bobbin holder 41 and the second bobbin holder 42 can be changed by rotating the turret plate 40. Note that another device may be used instead of the turret plate 40, as long as the positions of the first bobbin holder 41 and the second bobbin holder 42 can be changed.

The first bobbin holder 41 is rotatable with respect to the turret plate 40 using the axis position of the first bobbin holder 41 as the center of rotation. The first bobbin holder 41 is rotationally driven by a first bobbin holder motor 54 shown in FIG. 3. Similarly, the second bobbin holder 42 is rotatable with respect to the turret plate 40 using the axis position of the second bobbin holder 42 as the center of rotation. The second bobbin holder 42 is rotationally driven by a second bobbin holder motor 55 shown in FIG. 3. The first bobbin holder motor 54 and the second bobbin holder motor 55 are controlled by the control device 50, which will be described later.

Hereinafter, the first bobbin holder 41 and the second bobbin holder 42 are collectively referred to as bobbin holders 41 and 42. FIG. 1 shows a state in which the bobbin holders 41 and 42 are arranged side by side in the up-down direction. At this time, the position of the bobbin holders 41 and 42 on the higher side is the winding position, and the position of the bobbin holders 41 and 42 on the lower side is the standby position. The thread winding machine 1 produces the package 94 by winding the thread 93 around the bobbins 91 of the bobbin holders 41 and 42 at the winding position.

Also, if the packages 94 of the first bobbin holder 41 are fully wound by winding a predetermined amount of the thread 93, the positions of the first bobbin holder 41 and the second bobbin holder 42 are switched by rotating the turret plate 40. Thereafter, the packages 94 of the first bobbin holder 41 that are fully wound and are at the standby position are collected, and the thread 93 is wound onto the bobbins 91 of the second bobbin holder 42 that are at the winding position. New bobbins 91 are mounted on the first bobbin holder 41 from which the packages 94 have been collected.

The control device 50 includes a control unit 50a, a training unit 50b, a determination unit 50c, and a storage unit 50d. Specifically, the control device 50 is configured as a known computer, and includes a CPU (Central Processing Unit), a RAM (Random Access Memory), an SSD (Solid State Drive), and the like. A CPU is a type of processor. Programs and data for controlling the thread winding machine 1 are stored in advance in the SSD. Due to the CPU reading out the program to the RAM and executing the program, the control device 50 can operate as the control unit 50a, the training unit 50b, and the determination unit 50c. Also, the SSD corresponds to the storage unit 50d. Note that an HDD (Hard Disk Drive) or flash memory may be used instead of the SSD. Alternatively, a storage that is provided outside of the control device 50 and can communicate with the control device 50 may also be used as the storage unit.

The control unit 50a performs overall control of the control device 50. The control unit 50a processes the data input to the control device 50 from the outside or data stored in the storage unit 50d. The control unit 50a stores the data obtained through this processing in the storage unit 50d or outputs the data to the outside of the control device 50. The training unit 50b performs processing for constructing an estimation model using machine learning. Details of the estimation model constructed by the training unit 50b will be described later. The determination unit 50c performs determination processing based on data externally input to the control device 50 and the estimation model constructed by the training unit 50b and stored in the storage unit 50d. The storage unit 50d stores data according to the processing of the control unit 50a.

FIG. 3 shows an imaging device 61 and a notification unit 65. The imaging device 61 images the bobbins 91 to generate bobbin images. The imaging device 61 is, for example, a camera that captures still images. However, the imaging device 61 may also be a video camera that captures moving images. If the imaging device 61 is a video camera, the imaging device 61 may generate images from moving images. The notification unit 65 notifies the operator of the determination result of the determination unit 50c. The notification unit 65 is, for example, a notification lamp or a notification buzzer.

FIG. 3 shows the mounting state detection device 10. The mounting state detection device 10 detects the mounting states of the bobbins 91 on the bobbin holder 41 of the thread winding machine 1. The mounting state detection device 10 includes the control device 50, the imaging device 61, and the notification unit 65. The control device 50 performs the following processing as a component of the mounting state detection device 10.

That is, the control unit 50a outputs data to the training unit 50b and the determination unit 50c for processing. The control unit 50a causes the storage unit 50d to store the data obtained by the training unit 50b and the determination unit 50c performing processing. Also, the control unit 50a causes the storage unit 50d to store data (bobbin images) generated by the imaging device 61 performing imaging. The control unit 50a controls and operates the notification unit 65 in order to output the detected mounting states. Note that the traverse motor 51, the turret motor 53, the first bobbin holder motor 54, and the second bobbin holder motor 55 are further included as objects to be controlled by the control unit 50a. The training unit 50b constructs an estimation model by performing machine learning based on the bobbin images and the like stored in the storage unit 50d. The determination unit 50c performs determination processing regarding the mounting states of the bobbins 91 based on data externally input to the control device 50 and the estimation model constructed by the learning unit 50b and stored in the storage unit 50d. The determination result obtained through the determination processing of the determination unit 50c is output to the outside or stored in the storage unit 50d by the control unit 50a. The storage unit 50d stores data obtained through the processing of the control unit 50a, the training unit 50b, and the determination unit 50c, as described above.

The mounting orientation of the bobbin 91 will be briefly described. Since the slit 91a is formed in the bobbin 91 as described above, the first side and the second side in the axial direction of the bobbin 91 are not symmetrical. Accordingly, it is necessary to attach the bobbins 91 to the bobbin holders 41 and 42 in the correct orientation. Specifically, the bobbins 91 need to be mounted on the bobbin holders 41 and 42 with the slits 91a facing away from the turret plate 40.

Next, a gap between adjacent bobbins 91 will be briefly described. As described above, in this embodiment, a plurality of bobbins 91 are arranged side by side in the axial direction of the first bobbin holder 41 (second bobbin holder 42), and the thread 93 is wound around each bobbin 91. For this reason, the traverse guide 23 and the thread guide (not shown) are also arranged side by side in the axial direction. Here, if the gap between the bobbins 91 is out of the appropriate range, the positions of the bobbins 91 are out of the appropriate range. As a result, the difference between the position of the traverse guide 23 and the like and the position of the bobbin 91 increases, and the thread 93 cannot be properly wound.

The mounting state detection device 10 may also detect only one of the mounting orientation of the bobbin 91 and the gap between adjacent bobbins 91. Alternatively, the mounting state detection device 10 may also detect the mounting state of a bobbin 91 other than these.

As shown in FIGS. 1 and 2, the imaging devices 61 are arranged such that the lenses face the bobbin holders 41 and 42. In this embodiment, the imaging devices 61 image the bobbins 91 at the standby position, but alternatively or additionally, the imaging devices 61 may image the bobbins 91 at the winding position. As shown in FIG. 2, one imaging device 61 images two bobbins 91. However, the imaging devices 61 may also be configured to image one or three or more bobbins 91. Images generated by the imaging devices 61 imaging the bobbins 91 are called bobbin images.

The imaging devices 61 image the bobbins 91 to generate a plurality of bobbin images while the second bobbin holder 42 is rotationally driven by the second bobbin holder motor 55. As described above, the slit 91a is formed only partially in the circumferential direction of the bobbin 91 in some cases. For this reason, in a situation where the part where the slit 91a is formed is the blind spot of the imaging device 61, there is a possibility that the slit 91a cannot be imaged. In this regard, by imaging the bobbins 91 while rotating the second bobbin holder 42, it is possible to image various locations on the outer circumferential surfaces of the bobbins 91, and therefore bobbin images including the slits 91a can be generated more reliably.

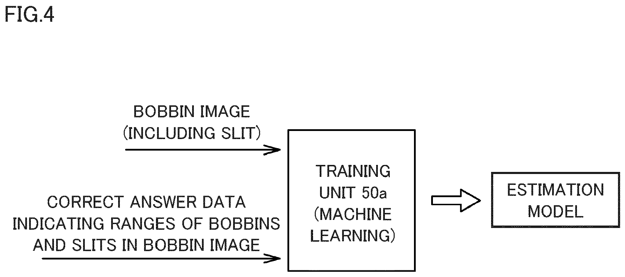

FIG. 4 conceptually shows processing for the training unit 50b to construct an estimation model using machine learning. The estimation model is constructed by performing machine learning of a bobbin image as training data and correct answer data indicating the range of the bobbin and the range of the slit in the bobbin image. Accordingly, this machine learning is supervised learning. Although the specific technique for performing machine learning is optional, deep learning is used in this embodiment. As a result, the training unit 50b can learn the relationship between the bobbin image and the range of the bobbin 91, and extract features for estimating a range of a bobbin 91 from a bobbin image. Similarly, the training unit 50b can learn the relationship between the bobbin image and the range of the slit 91a, and extract features for estimating a range of a slit 91a from a bobbin image. As described above, the training unit 50b constructs an estimation model. The estimation model constructed by the training unit 50b is stored in the storage unit 50d.

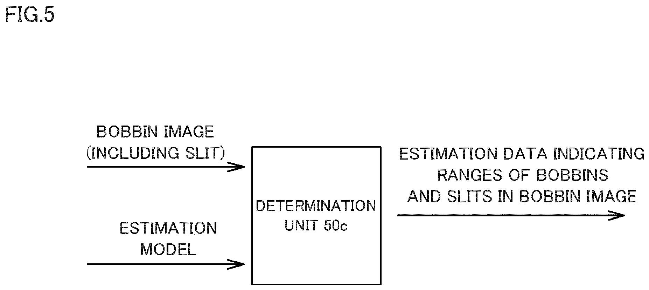

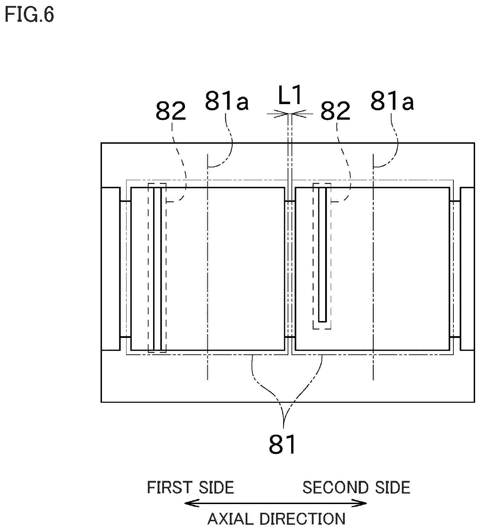

As shown in FIG. 5, the determination unit 50c generates estimation data indicating a range of a bobbin and a range of a slit in a bobbin image from a bobbin image generated by the imaging device 61 and the estimated model. FIG. 6 shows the estimation results of the estimation model. FIG. 6 is a diagram in which bobbin ranges 81 and slit ranges 82 are superimposed on a bobbin image.

The estimation model described above is an example, and the estimation model may also be constructed through another method. That is, instead of deep learning, machine learning may also be performed by the user specifying feature amounts related to the outline or the like of the bobbin 91. Also, the estimation model is an example, and for example, the orientation of the bobbin 91 may be used as the estimation model.

The storage unit 50d stores the correct mounting orientation of the bobbin 91. In the present embodiment, the orientation in which the slit 91a is located on the first side is the correct mounting orientation of the bobbin 91. Also, the storage unit 50d stores a threshold range, which is an appropriate range for the gap between adjacent bobbins 91. The threshold range is determined experimentally or empirically in advance.

The determination unit 50c determines whether or not the mounting states of the bobbins 91 are appropriate. Specifically, based on the bobbin ranges 81 estimated by the estimation model, the determination unit 50c creates central virtual lines 81a indicating the center positions in the axial direction of the bobbin ranges 81. The determination unit 50c accesses the storage unit 50d and acquires the correct mounting orientation of the bobbin 91. Next, the determination unit 50c determines whether the slit ranges 82 are on the first side or the second side in the axial direction with respect to the central virtual lines 81a. The determination unit 50c determines that the mounting orientations of the bobbins 91 are correct if the slit ranges 82 are located on the first side of the central virtual lines 81a. Note that if the determination unit 50c has a storage device, the correct mounting orientation of the bobbin 91 may also be stored in the storage device of the determination unit 50c.

Next, the determination unit 50c compares two adjacent bobbin ranges 81 and calculates a length L1, which is the gap between the bobbin ranges 81. The determination unit 50c accesses the storage unit 50d and acquires a threshold range, which is an appropriate range for the gap between the adjacent bobbins 91. Next, the determination unit 50c determines whether or not the length L1 satisfies the threshold range. The determination unit 50c determines that the gap between the bobbin ranges 81 is appropriate if the length L1 calculated from the bobbin image satisfies the threshold range. Note that FIG. 6 is a diagram for showing the processing of the determination unit 50c in an easily comprehensible manner, and the processing for superimposing the bobbin ranges 81 and the slit ranges 82 on the bobbin image may also be omitted. Note that if the determination unit 50c has a storage device, the threshold range may also be stored in the storage device of the determination unit 50c.

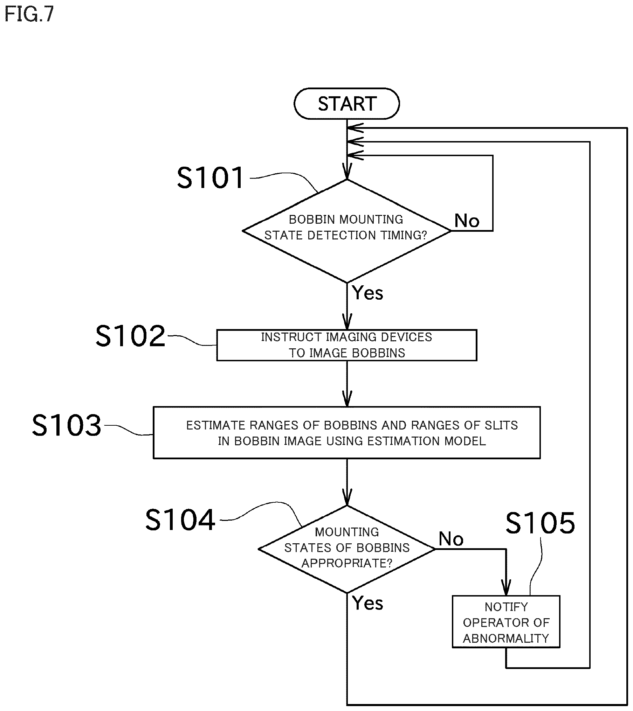

Next, processing performed by the mounting state detection device 10 will be described mainly with reference to FIG. 7.

The control device 50 determines whether or not the detection timing for detecting the bobbin mounting state has been reached (S101). The detection timing is after the start of the task of mounting the bobbins 91 on the bobbin holders 41 and 42 and before the start of the winding of the thread 93 by the thread winding machine 1. The control device 50 may also determine whether or not the detection timing has been reached based on the detection value of the sensor, or may determine that the detection timing has been reached when there is an instruction from an operator

If it is determined that the detection timing has been reached, the control unit 50a of the control device 50 instructs the imaging devices 61 to image the bobbins 91 (S 102). Next, the determination unit 50c of the control device 50 uses the bobbin images generated by the imaging devices 61 and the estimation model stored in the storage unit 50d to estimate the ranges of the bobbins 91 and the ranges of the slits 91a in the bobbin images as described above (S103).

Next, the determination unit 50c of the control device 50 determines whether or not the mounting states of the bobbins 91 are appropriate, as described above, based on the estimation results of the determination unit 50c (S104). If it is determined that the mounting states of the bobbins 91 are appropriate, the control unit 50a of the control device 50 returns to the processing of step S101 again. If it is determined that the mounting states of the bobbins 91 are not appropriate, the control unit 50a of the control device 50 controls the notification unit 65 to notify the operator of the abnormality (S105).

By repeating the above processing, the mounting state detection device 10 can detect whether or not the mounting states of the bobbins 91 are appropriate. In particular, detection accuracy can be increased by performing detection using an estimation model constructed through machine learning.

C. Hardware Configuration of Control Device 50

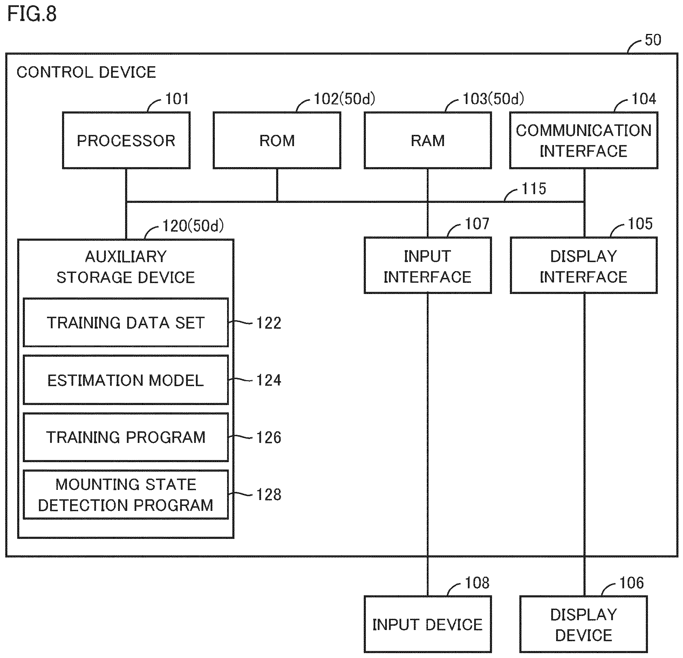

Next, the hardware configuration of the control device 50 shown in FIG. 3 will be described with reference to FIG. 8. FIG. 8 is a diagram showing an example of the hardware configuration of the control device 50.

The control device 50 includes the above-described storage unit 50d (see FIG. 3), a processor 101, a communication interface 104, a display interface 105, and an input interface 107. These components are connected to a bus 115. Examples of the storage unit 50d include a ROM (Read Only Memory) 102, a RAM 103, an auxiliary storage device 120, and the like.

The processor 101 is constituted by, for example, at least one integrated circuit. An integrated circuit can be constituted by, for example, at least one CPU, at least one GPU (Graphics Processing Unit), at least one ASIC (Application Specific Integrated Circuit), at least one FPGA (Field Programmable Gate Array), or a combination thereof.

The processor 101 controls the operation of the control device 50 by executing various programs. The processor 101 reads out programs to be executed from the auxiliary storage device 120 or the ROM 102 to the RAM 103 upon receiving execution instructions for various programs. The RAM 103 functions as a working memory and temporarily stores various types of data necessary for program execution.

ALAN (Local Area Network), an antenna, and the like are connected to the communication interface 104. The control device 50 exchanges data with an external device via the communication interface 104. The external device includes, for example, a server.

A display device 106 is connected to the display interface 105. The display interface 105 sends an image signal for displaying an image to display device 106 according to a command from the processor 101 or the like.

The display device 106 is, for example, a liquid crystal display, an organic EL (Electro Luminescence) display, or other display. Note that the display device 106 may also be formed in one piece with the control device 50 or may be formed separately from the control device 50.

The input device 108 is connected to the input interface 107. The input device 108 is, for example, a mouse, keyboard, touch panel, or other device capable of accepting user operations. Note that the input device 108 may be formed in one piece with the control device 50 or may be formed separately from the control device 50.

The auxiliary storage device 120 is, for example, a storage medium such as a hard disk, a flash memory, and an SSD. The auxiliary storage device 120 stores, for example, a training data set 122, the above-described estimation model 124, a training program 126, and a mounting state detection program 128. The storage location for these is not limited to the auxiliary storage device 120, and they may also be stored in a storage region of the processor 101 (e.g., cache memory, etc.), the ROM 102, the RAM 103, an external device (e.g., a server), or the like.

The training program 126 is a program for generating the estimation model 124 using the training data set 122. The training program 126 may also be provided as part of any program, instead of as a standalone program. In this case, the training processing performed by the training program 126 is realized in cooperation with any program. Even if a program does not include some of these modules, the program does not deviate from the gist of the training program 126 according to the present embodiment. Furthermore, some or all of the functions provided by the training program 126 may also be realized by dedicated hardware. Furthermore, the control device 50 may be included in the form of a so-called cloud service in which at least one server executes some of the processing of the training program 126.

The mounting state detection program 128 is a program for determining the mounting states of the bobbins 91 on the bobbin holders 41 and 42 of the thread winding machine 1 using the trained estimation model 124. The mounting state detection program 128 may also be provided as a part of any program, instead of as a standalone program. In this case, the determination processing performed by the mounting state detection program 128 is realized in cooperation with any program. Even if a program does not include some of these modules, the program does not deviate from the gist of the mounting state detection program 128 according to the present embodiment. Furthermore, some or all of the functions provided by the mounting state detection program 128 may also be realized by dedicated hardware. Furthermore, the control device 50 may be included in the form of a so-called cloud service in which at least one server executes some of the processing of the mounting state detection program 128.

D. Training Data Set 122

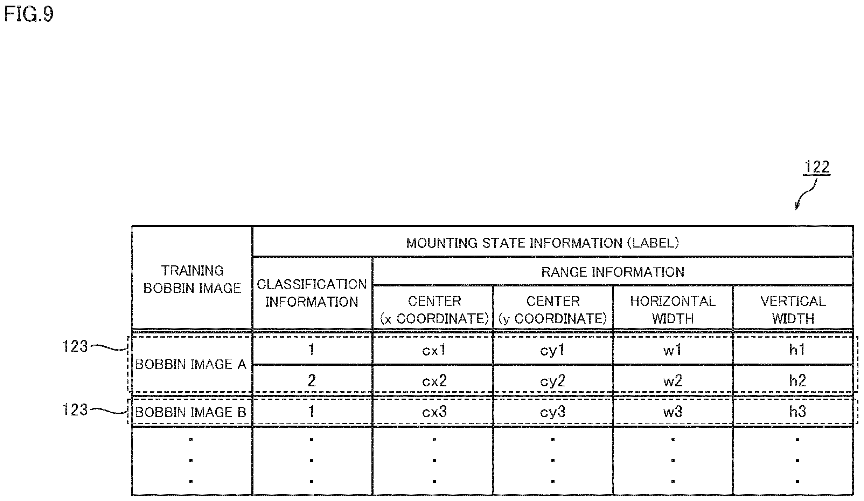

Next, the training data set 122 shown in FIG. 8 will be described with reference to FIG. 9. FIG. 9 is a diagram showing an example of the training data set 122.

The training data set 122 includes a plurality of pieces of training data 123. The number of pieces of training data 123 included in the training data set 122 is set as appropriate. As an example, the number of pieces of training data 123 is several tens to hundreds of thousands.

Each piece of the training data 123 associates a training bobbin image showing a bobbin 91 with mounting state information representing the mounting state of the bobbin 91, as a label (correct answer value). FIG. 9 shows a combination of classification information and range information as an example of mounting state information. One or more combinations of classification information and range information are associated with one training bobbin image.

Classification information is information that defines the type of an object shown in a bobbin image. The classification information is indicated by, for example, identification information that uniquely indicates the type of the object. The identification information is defined in advance for each object. As an example, identification information "1" indicates an object type "bobbin", and identification information "2" indicates an object type "slit".

The range information is information that defines the range of the object in the bobbin image with coordinate information. The coordinate information is defined, for example, by the center coordinates of the object, the horizontal width of the object, and the vertical width of the object.

E. Functional Configuration of Control Device 50

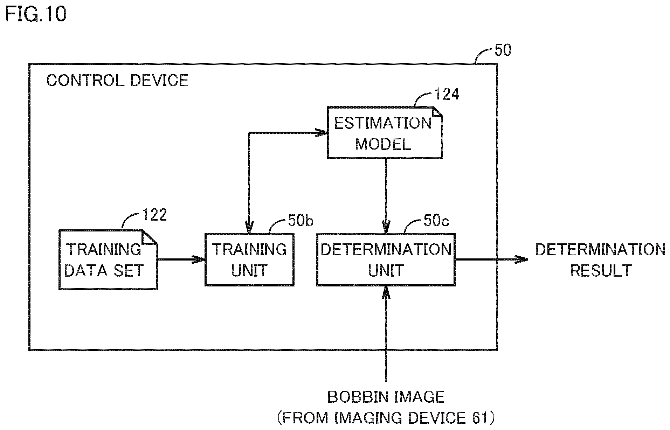

Next, the functional configuration of the control device 50 will be described with reference to FIGS. 10 to 12. FIG. 10 is a diagram showing an example of the functional configuration of the control device 50.

As shown in FIG. 10, the control device 50 includes a training unit 50b and a determination unit 50c as functional configurations. These functional configurations will be described in order below.

E1. Training Unit 50b

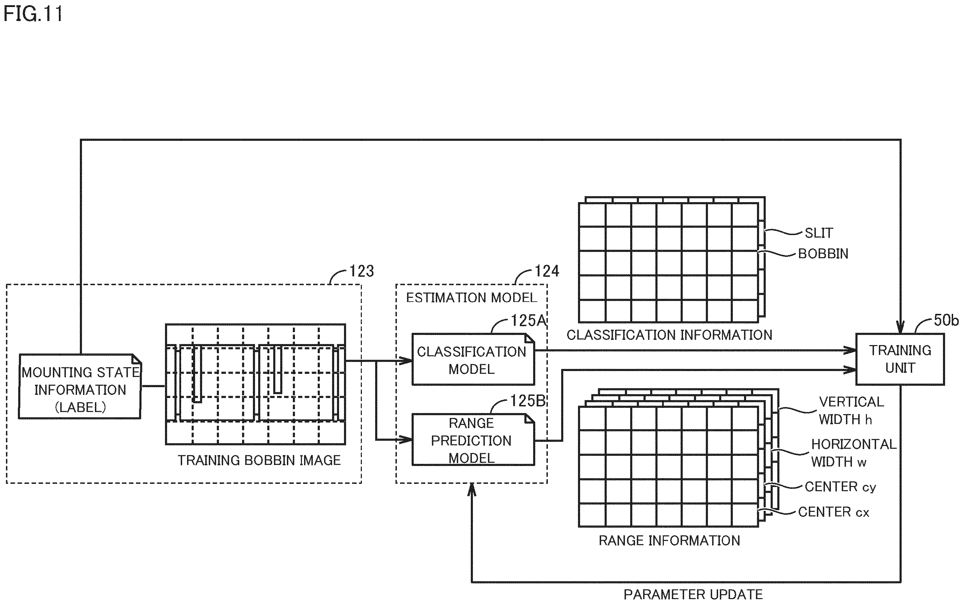

First, the function of the training unit 50b shown in FIG. 10 will be described with reference to FIG. 11. FIG. 11 is a diagram conceptually showing the training processing performed by the training unit 50b.

The training unit 50b executes training processing using the above-described training data set 122 (see FIG. 9), and generates an estimation model 124 that outputs the type of the object shown in the bobbin image and the range of the object shown in the bobbin image.

A machine learning algorithm for realizing detection of the object type and the object range is not particularly limited. The machine learning algorithms include R-CNN (Regions with Convolutional Neural Network), Fast R-CNN, Faster R-CNN, SSD (Single Shot MultiBox Detector), YOLO (You Only Look Once), and the like. Hereinafter, an example of a machine learning algorithm will be described.

The estimation model 124 is configured to receive input of a training bobbin image defined in the training data 123. The training bobbin image is divided into a plurality of regions according to predetermined settings. Each divided region in the bobbin image is hereinafter also referred to as a "grid cell". In the example of FIG. 11, the training bobbin image is divided into 35 (=7×5) grid cells.

The estimation model 124 is constituted by, for example, a classification model 125A and a range prediction model 125B. The classification model 125A and the range prediction model 125B may each have a separate network structure, or may be configured to share some of the network structure.

The classification model 125Areceives input of a training bobbin image and outputs the type of an object included in the training bobbin image as an estimation result. The number of pieces of classification information output as estimation results is proportional to the number of classification objects and the number of grid cells in the training bobbin image. As an example, if the number of the classification objects is two, namely, a bobbin and a slit, and the number of grid cells is 35 (=7×5), the classification model 125A outputs a score of 70 (=2×35) as the classification information.

The range prediction model 125B receives input of a training bobbin image and outputs range information of an object included in the training bobbin image as an estimation result. The range information is defined by a combination of "cx" and "cy" indicating the center coordinates of the object, "w" indicating the horizontal width of the object, and "h" indicating the vertical width of the object. The number of pieces of range information output as estimation results is proportional to the number of grid cells in the training bobbin image. As an example, if the training bobbin image is divided into 35 (=7×5) grid cells, the range prediction model 125B outputs 35 pieces of range information.

Note that one or more bounding boxes may be set for each grid cell, depending on the machine learning algorithm employed. A bounding box means a rectangular frame that roughly indicates the range of each object shown in the bobbin image. In this case, the number of pieces of classification information output by the classification model 125A is proportional not only to the number of classification objects and the number of grid cells in the training bobbin image, but also to the number of set bounding boxes. Also, the number of pieces of range information output by the range prediction model 125B is proportional not only to the number of grid cells but also to the number of bounding boxes that are set.

Next, processing for updating the internal parameters of the estimation model 124 by the training unit 50b will be described.

The training unit 50b inputs the training bobbin image defined in the training data 123 to the estimation model 124. As a result, the training unit 50b acquires the classification information and the range information as the estimation results of the estimation model 124. Thereafter, the training unit 50b refers to the mounting state information serving as the correct answer value defined in the training data 123, and calculates the error between the mounting state information and the estimation result of the estimation model 124. Next, the training unit 50b updates the internal parameters (for example, weight and bias) of the estimation model 124 such that the error becomes smaller. Updating of the internal parameters is realized through error backpropagation, for example.

The training unit 50b repeatedly performs processing for updating the internal parameters of the estimation model 124 for each piece of training data 123 included in the training data set 122. The estimation model 124 outputs more accurate estimation results as learning progresses. Through the above training processing, the estimation model 124 receives input of a bobbin image and outputs a score indicating the likelihood that the classification object is shown, and range information indicating coordinate information of the classification object for each grid cell.

Note that the training unit 50b does not need to use all the training data 123 included in the training data set 122 for the training processing, and may use some of the training data 123 included in the training data set 122 to generate the estimation model 124. The remaining training data 123 is used, for example, for evaluation of the estimation model 124 and the like.

E2. Determination Unit 50c

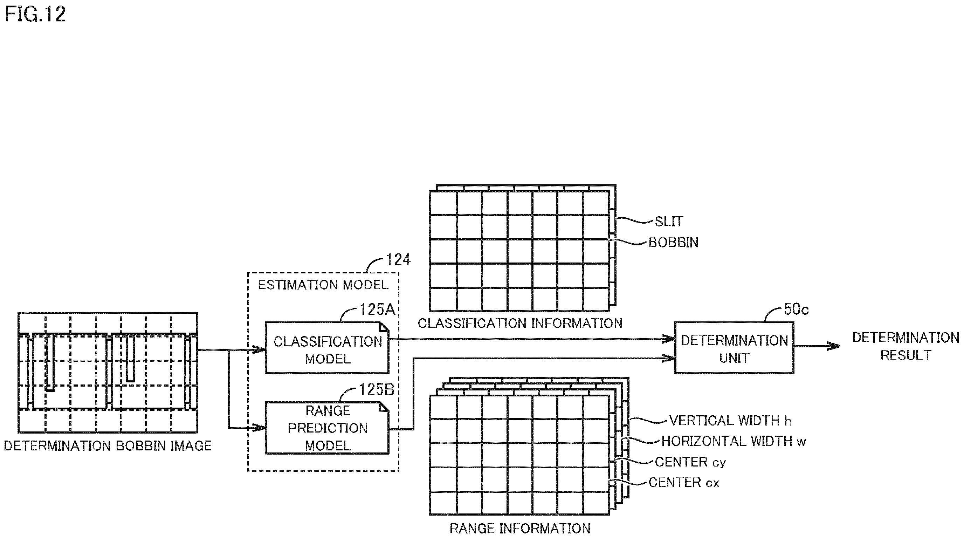

Next, the function of the determination unit 50c shown in FIG. 10 will be described with reference to FIG. 12. FIG. 12 is a diagram conceptually showing the mounting state determination processing performed by the determination unit 50c.

First, the determination unit 50c acquires the estimation model 124 generated by the training unit 50b from a storage location. The estimation model 124 may be acquired from the storage unit 50d described above, or an external device.

Next, the determination unit 50c acquires a determination bobbin image from the imaging device 61 by imaging the bobbins 91 mounted on the bobbin holders 41 and 42. The determination bobbin image is an image used for determining whether or not the bobbins 91 are mounted normally on the bobbin holders 41 and 42. The determination unit 50c inputs the acquired determination bobbin image to the estimation model 124 and acquires the mounting state information output from the estimation model 124. Thereafter, the determination unit 50c determines whether or not the bobbins 91 are mounted normally on the bobbin holders 41 and 42 based on the mounting state information. In the example of FIG. 12, the above-described classification information and the above-described range information are shown as the mounting state information output from the estimation model 124.

The determination unit 50c integrates the classification information and the range information output from the estimation model 124, and detects whether or not there is a classification target object in the estimation image, and the range information of the object. More specifically, if there are two types of classification objects, namely the bobbin 91 and the slit 91a, the classification information includes a score indicating the likelihood that the bobbin 91 is present and a score indicating the likelihood that the slit 91a is present for each grid cell. The determination unit 50c determines that the bobbin 91 is shown in the grid cell for which the score for the bobbin 91 exceeds a predetermined value. Also, the determination unit 50c determines that the slit 91a is shown in the grid cell for which the score for the slit 91a exceeds a predetermined value. Thereafter, the determination unit 50c refers to the range information corresponding to those grid cells, and specifies the bobbin range indicating the range of the bobbin 91 in the determination bobbin image and the slit range indicating the range of the slit 91a in the determination bobbin image.

The determination unit 50c detects various mounting abnormalities of the bobbin 91 based on the specified bobbin range and slit range.

As an example, the determination unit 50c determines whether or not the mounting orientations of the bobbins 91 on the bobbin holders 41 and 42 are normal. A determination is made regarding whether or not the mounting orientations of the bobbins 91 are normal, for example, based on the positional relationships between the bobbin ranges and the slit ranges. More specifically, the determination unit 50c determines whether the relative position of the slit range with respect to the bobbin range is closer to the above-described first side (see FIG. 6) or the above-described second side (see FIG. 6). If the position of the slit 91a with respect to the bobbin 91 is on the first side, the determination unit 50c determines that the mounting orientation of the bobbin 91 is normal. On the other hand, if the position of the slit 91a with respect to the bobbin 91 is on the second side, the determination unit 50c determines that the mounting orientation of the bobbin 91 is abnormal.

As another example, the determination unit 50c determines whether or not the interval between the bobbins 91 included in the determination bobbin image is normal. A determination is made regarding whether or not the interval is normal, for example, based on the positional relationship between adjacent bobbin ranges among the bobbin ranges in the determination bobbin image. More specifically, the determination unit 50c calculates the distance between the adjacent bobbin ranges, and based on the distance, calculates the above-described length L1 (see FIG. 6), which is the interval between the adjacent bobbins 91. If the length L1 is within the predetermined threshold range, the determination unit 50c determines that the interval between adjacent bobbins 91 is normal. On the other hand, if the length L1 is not included in the predetermined threshold range, the determination unit 50c determines that the interval between adjacent bobbins 91 is abnormal.

Note that the output mode of the determination result by the determination unit 50c is not particularly limited. As an example, the determination unit 50c outputs a warning including the type of mounting abnormality that has occurred. The warning may, for example, be displayed as a message on the above-described display device 106, may be output by voice, or may be stored in the storage unit 50d as a log.

F. First Modified Example

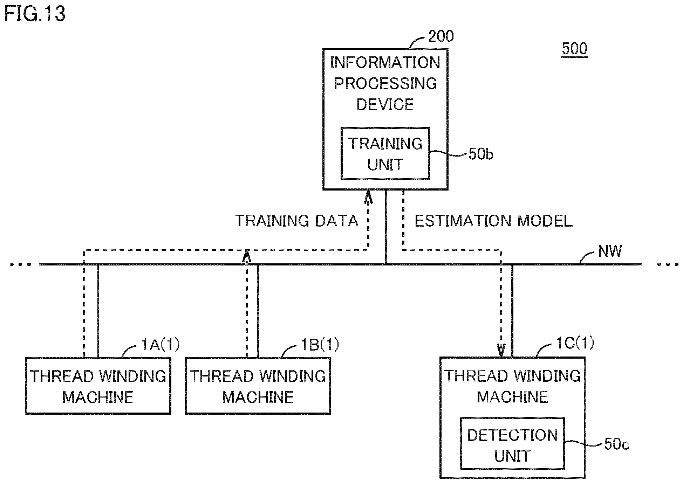

Next, a first modified example of the above embodiment will be described with reference to FIG. 13. Note that in the following description, the same or similar members as those in the above-described embodiment are denoted by the same reference numerals in the drawings, and their description is omitted in some cases.

In the example of FIG. 11 described above, the training unit 50b and the determination unit 50c were provided in the same thread winding machine 1. However, the training unit 50b and the determination unit 50c do not necessarily need to be provided in the same thread winding machine 1. As an example, the training unit 50b may also be provided in a different device.

FIG. 13 is a diagram showing an example of the device configuration of a mounting state determination system 500 according to this modified example. As shown in FIG. 13, the mounting state determination system 500 includes one or more thread winding machines 1 and one or more information processing devices 200. In the example of FIG. 13, the mounting state determination system 500 is constituted by three thread winding machines 1A to 1C and one information processing device 200.

The thread winding machines 1A to 1C and the information processing device 200 are connected to the same network NW and are configured to be able to communicate with each other. The thread winding machines 1 and the information processing device 200 may also be communicatively connected by wire or wirelessly.

The information processing device 200 is a desktop personal computer, a notebook personal computer, a tablet terminal, or another information processing terminal.

In the example of FIG. 13, the training unit 50b is provided in the information processing device 200. Also, the determination unit 50c is provided in the thread winding machine 1C.

The information processing device 200 collects the above-described training data 123 (see FIG. 9) from the thread winding machines 1 (e.g., the thread winding machines 1A and 1B) connected to the network NW. Next, the training unit 50b of the information processing device 200 executes training processing using the training data 123 collected from all of the thread winding machines 1, and generates the above-described estimation model 124. Since the function of the training unit 50b is as described above, description thereof will not be repeated.

Thereafter, the information processing device 200 transmits the generated estimation model 124 to the thread winding machine 1 (e.g., the thread winding machine 1C). The determination unit 50c of the thread winding machine 1C uses the estimation model 124 to detect mounting abnormalities of the bobbins 91 mounted on the bobbin holders 41 and 42 of the thread winding machines 1. Since the function of the determination unit 50c is as described above, description thereof will not be repeated.

G. Second Modified Example

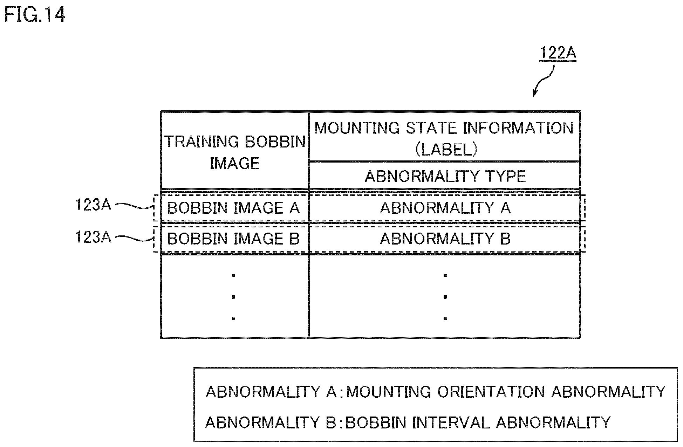

Next, a second modified example of the above-described embodiment will be described with reference to FIGS. 14 to 17.

The above-described mounting state detection device 10 specifies the bobbin range and the slit range in the determination bobbin image, and detects a mounting abnormality of the bobbins 91 based on the bobbin range and the slit range. In contrast, in this modified example, the mounting state detection device 10 directly detects the type of mounting abnormality of the bobbins 91 from the determination bobbin image. Note that other respects such as the hardware configuration of the mounting state detection device 10 are as described above, and therefore description thereof will not be repeated.

G1. Training Data Set 122A

First, a training data set 122A used for generating an estimation model for outputting the type of mounting abnormality of the bobbins 91 will be described with reference to FIG. 14. FIG. 14 is a diagram showing an example of the training data set 122A.

The training data set 122A includes a plurality of pieces of training data 123A. The number of pieces of training data 123A included in the training data set 122A is set as appropriate. As an example, the number of pieces of training data 123A is several tens to several hundreds of thousands.

Each piece of the training data 123A associates a training bobbin image showing a bobbin 91 with mounting state information representing the mounting state of the bobbin 91, as a label (correct answer value). FIG. 14 shows the types of mounting abnormalities of the bobbins 91 as an example of the mounting state information.

The type of label defined in the training data set 122A may be one type or a plurality of types. In the example of FIG. 14, an abnormality "A" indicating that the mounting orientation of the bobbin 91 is incorrect, and an abnormality "B" indicating that the interval between the bobbins 91 is incorrect are shown as labels for mounting abnormalities.

G2. Training Unit 50e

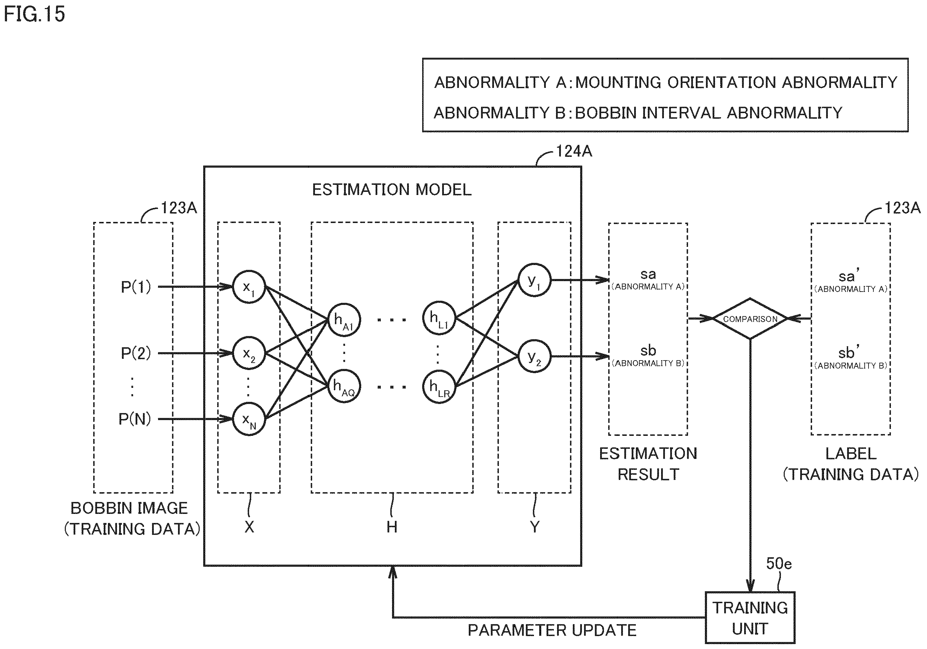

Next, a training unit 50e, which is a modified example of the above-described training unit 50b (see FIG. 10), will be described with reference to FIG. 15. FIG. 15 is a diagram conceptually showing training processing performed by the training unit 50e in this modified example.

The training unit 50e executes training processing using the above-described training data set 122A (see FIG. 14), and generates an estimation model 124A for identifying a mounting abnormality of a bobbin 91. A machine learning algorithm employed for training processing is not particularly limited, and for example, deep learning, a convolutional neural network (CNN), a full-layer convolutional neural network (FCN), a support vector machine, or the like can be employed thereas. Hereinafter, training processing using deep learning will be described.

As shown in FIG. 15, the estimation model 124A is constituted by an input layer X, an intermediate layer H, and an output layer Y.

The input layer X is configured to receive input of the bobbin image of the training data 123A. The input layer X is constituted by, for example, N units $x_1$ to $x_N$ (N is a natural number). The number of units constituting the input layer X is the same as the number of dimensions of input information.

As an example, if the number of pixels of the bobbin image is N pixels and each pixel of the bobbin image is input to the input layer X as-is, the input layer X is constituted by N units. As another example, the feature amount extracted from the bobbin image may be input to the input layer X. In this case, the input layer X is configured such that the number of units is the same as the number of dimensions of the feature amount after feature extraction. Each unit constituting the input layer X outputs input data to each unit of the first layer of the intermediate layer H.

The intermediate layer H is constituted by one layer or a plurality of layers. In the example of FIG. 15, the intermediate layer H is constituted by L layers (L is a natural number). Each layer of the intermediate layer H includes a plurality of units. The number of units in each layer of the intermediate layer H may be the same or different. In FIG. 15, the first layer of the intermediate layer H is constituted by Q units $h_{A1}$ to $h_{AQ}$ (Q is a natural number). Also, the final layer of the intermediate layer H is constituted by R units $h_{L1}$ to $h_{LR}$ (R is a natural number).

Each unit constituting each layer of the intermediate layer H is connected to each unit of the previous layer and each unit of the next layer. Each unit in each layer receives an output value from each unit in the previous layer, multiplies the output value by a weight, accumulates the multiplication results, adds (or subtracts) a predetermined bias to (or from) the accumulation result, inputs the addition result (or subtraction result) to a predetermined function (e.g., a sigmoid function), and outputs the output value of the function to each unit of the next layer.

The output layer Y outputs an estimation result corresponding to the input bobbin image. The output layer Y is constituted by units $y_1$ and $y_2$, for example. Hereinafter, the units $y_1$ and $y_2$ are also referred to as units y.

Each of the units y is connected to the units $h_{L1}$ to $h_{LR}$ in the final layer of the intermediate layer H. Each unit y receives an output value from each unit of the final layer of the intermediate layer H, multiplies each output value by a weight, integrates the multiplication results, adds (or subtracts) a predetermined bias to (or from) the integration result, inputs the addition result (or subtraction result) to a predetermined function (e.g., a sigmoid function), and outputs the output result of the function as an output value.

The number of units constituting the output layer Y is determined according to the number of types of mounting abnormalities defined in the training data 123A. As an example, in the case of detecting mounting abnormalities "A" and "B", the number of units constituting the output layer Y is two, namely the units $y_1$ and $y_2$. In this case, the unit $y_1$ is configured to output a score "sa" that indicates the likelihood that the mounting abnormality "A" has occurred. The unit $y_2$ is configured to output a score "sb" indicating the likelihood that the mounting abnormality "B" has occurred.

Note that in the example of FIG. 15, the estimation model 124A is configured to output a plurality of scores, but one estimation model may also be configured to output one score. As an example, the first estimation model may be configured to output a score "sa" for an abnormality type "A", and the second estimation model may be configured to output a score "sb" for an abnormality type "B".

Next, processing for updating the internal parameters of the estimation model 124A by the training unit 50e will be described.

The training unit 50e inputs the bobbin image defined in the first piece of training data 123A to the estimation model 124A. Next, the training unit 50e obtains the estimation results "sa" and "sb" output from the estimation model 124A and correct answer scores "sa'" and "sb'" corresponding to the abnormality type associated with the first piece of training data 123A.

As an example, if the abnormality type associated with the training data 123A is "A", the correct answer score is (sa', sb')=(1,0). If the abnormality type associated with the training data 123A is "B", the correct answer score is (sa', sb')=(0,1).

The training unit 50e calculates an error "Z" between output results "sa" and "sb" of the estimation model 124A and the correct answer scores "sa'" and "sb'". An error "Z" is calculated, for example, based on the following formula (1).

$$Z=\{(sa-sa')^2+(sb-sb')^2\}/2 \quad ...(1)$$

Next, the training unit 50e updates the various parameters (for example, weights and biases) included in the estimation model 124A such that the error "Z" becomes smaller. Updating of the parameters is realized, for example, through the error backpropagation method.

The training unit 50e repeatedly updates the internal parameters of the estimation model 124A for each piece of training data 123A included in the training data set 122A. As a result, the estimation model 124A outputs more accurate estimation results as training progresses.

Note that the training unit 50e does not need to use all of the training data 123A included in training data set 122A for training processing, and may use some of the training data 123A included in the training data set 122A to generate the estimation model 124A. The remaining training data 123A is used, for example, for evaluation of the estimation model 124A.

G3. Determination Unit 50f

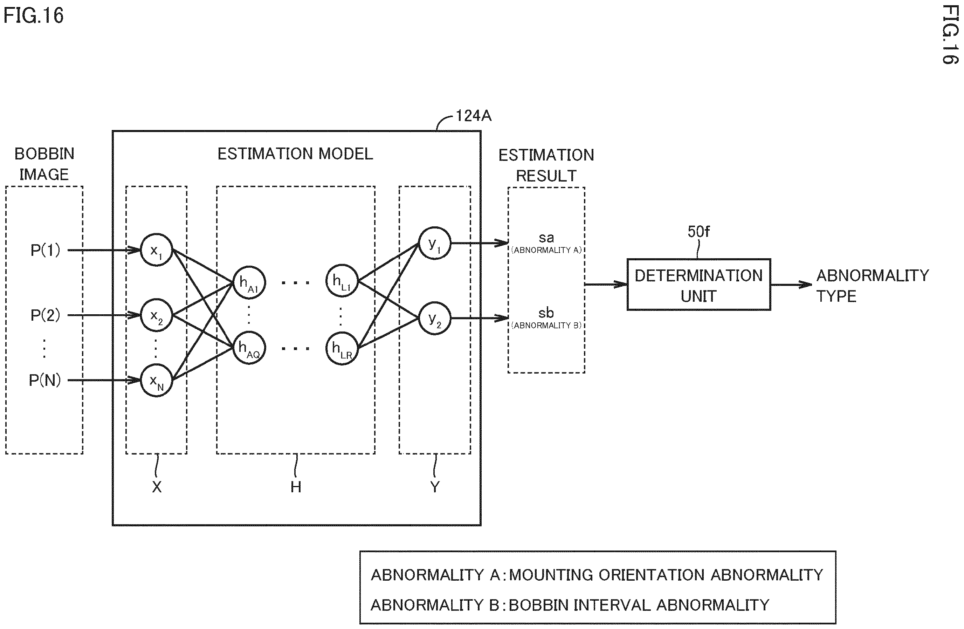

Next, the function of a determination unit 50f, which is a modified example of the above-described determination unit 50c (see FIG. 10), will be described with reference to FIG. 16. FIG. 16 is a diagram conceptually showing the mounting abnormality determination processing performed by the determination unit 50f according to the present modification.

First, the determination unit 50f acquires the estimation model 124A generated by the training unit 50e from a storage location. The estimation model 124A may be acquired from the storage unit 50d described above, or an external device.

Next, the determination unit 50f acquires a determination bobbin image from the imaging device 61 by imaging the bobbins 91 mounted on the bobbin holders 41 and 42. Thereafter, the determination unit 50f inputs the determination bobbin image to the estimation model 124A. As a result, the estimation model 124A outputs a score indicating the likelihood that a mounting abnormality of the bobbin 91 has occurred, to the abnormality type. The estimation model 124A outputs, for example, a score "sa" indicating the likelihood that the mounting abnormality "A" has occurred, and a score "sb" indicating the likelihood that the mounting abnormality "B" has occurred, as the estimation result.

The determination unit 50f determines the type of mounting abnormality that has occurred based on the scores "sa" and "sb". As an example, the determination unit 50f determines that the bobbin 91 has an abnormal mounting orientation if the score "sa" exceeds the first threshold. The first threshold may also be pre-set or set as appropriate by the user.

Also, the determination unit 50f determines that the bobbin 91 has an abnormal interval if the score "sb" exceeds the second threshold. The second threshold may also be preset or set as appropriate by the user. Also, the second threshold may be the same as the first threshold, or may be different from the first threshold.

Also, if the score "sa" is less than or equal to a first threshold and the score "sb" is less than or equal to a second threshold, the determination unit 50f determines that the bobbins 91 are mounted normally on the bobbin holders 41 and 42.

Note that the output mode of the determination result by the determination unit 50f is not particularly limited. As an example, the determination unit 50f outputs a warning including the type of mounting abnormality that has occurred. The warning may, for example, be displayed as a message on the above-described display device 106, output as sound by the above-described notification unit 65, or stored as a log in the storage unit 50d.

## H. Modified Example 4

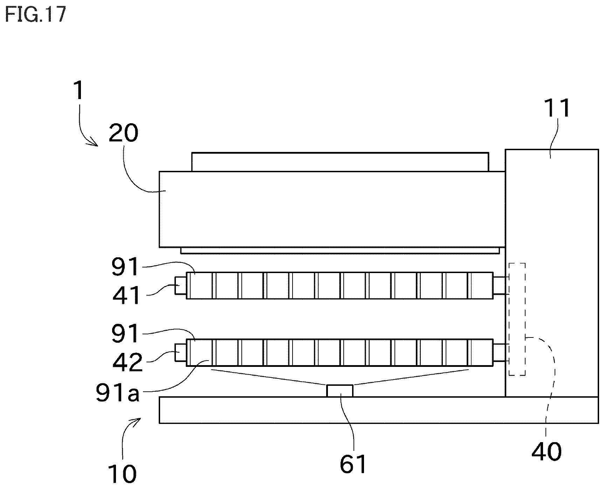

Next, a fourth modified example of the above embodiment will be described with reference to FIG. 17. FIG. 17 is a side view of the thread winding machine 1 of the fourth modified example.

In the above embodiment, one imaging device 61 images two bobbins 91. In contrast, in the fourth modified example, one imaging device 61 images all of the bobbins 91 mounted on the second bobbin holder 42. The imaging device 61 of the fourth modified example is a wide-angle camera and can image a wide range. Also, in order to image all of the bobbins 91, the imaging device 61 is arranged at a certain distance from the bobbins 91. For example, the imaging device 61 of the fourth modified example may also be arranged at a position spaced apart from the thread winding machine 1.

## I. Modified Example 5

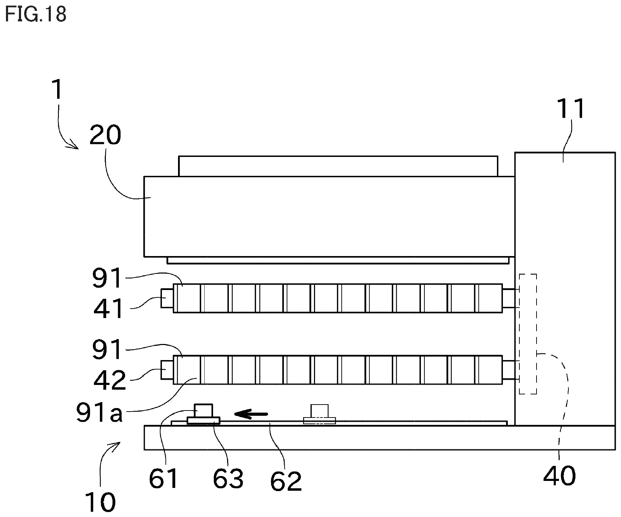

Next, a fifth modified example of the above embodiment will be described with reference to FIG. 18. FIG. 18 is a side view of the thread winding machine 1 of the fifth modified example.

In the above embodiment, the position of the imaging device 61 is fixed. On the other hand, in the fifth modified example, the imaging device 61 can travel along the axial direction of the second bobbin holder 42. Specifically, a rail 62 and a cart 63 are provided. The rail 62 is formed along the axial direction of the second bobbin holder 42. The cart 63 can travel along the rail 62. The imaging device 61 is arranged on the cart 63. This configuration allows the imaging device 61 to travel along the axial direction of the second bobbin holder 42.

A large number of bobbins 91 can be imaged using one imaging device 61 by causing the imaging device 61 to travel. The imaging device 61 may image the bobbins 91 while traveling, or may image the bobbins 91 after traveling and stopping at predetermined positions. In addition, although one cart 63 is shown in FIG. 18, a plurality of carts 63 may be provided.

## J. Modified Example 6

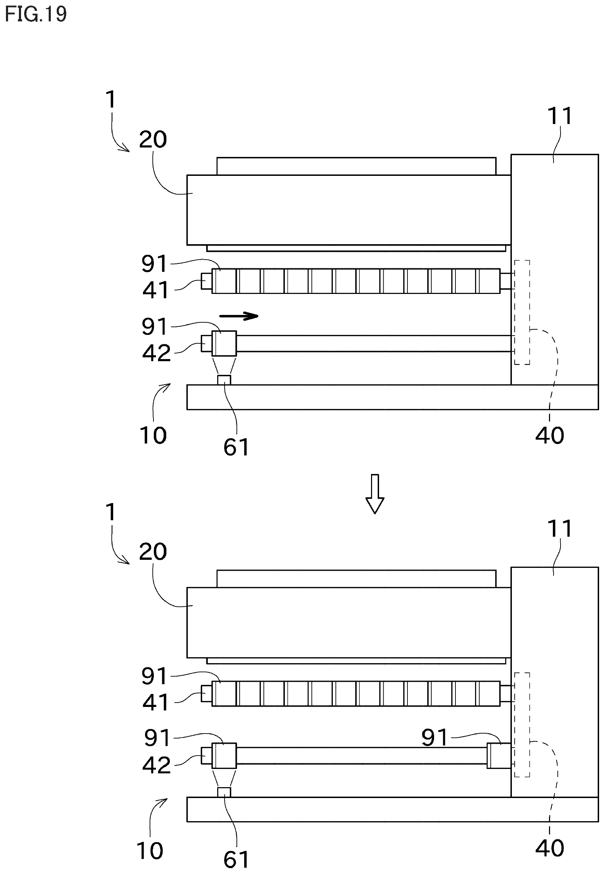

Next, a sixth modified example of the above embodiment will be described with reference to FIG. 19. FIG. 19 is a side view of the thread winding machine 1 of the sixth modified example.

In the above embodiment, the mounting state detection device 10 detects whether or not the mounting state of the bobbins 91 is appropriate when all of the bobbins 91 are mounted on the second bobbin holder 42. In contrast, in the sixth modified example, while the task of inserting the bobbins 91 onto the second bobbin holder 42 is being performed, the mounting state detection device 10 detects whether or not the mounting states of the bobbins 91 are appropriate.

Specifically, in the sixth modified example, the imaging device 61 is arranged near the insertion end of the second bobbin holder 42. The insertion end is the end on the side where the second bobbin holder 42 is inserted, and in other words, is the end on the side opposite to the turret plate 40. The bobbin 91 inserted from the insertion end is slid, and then the next bobbin 91 is inserted.

The imaging device 61 is arranged at a position at which the bobbin 91 inserted into the insertion end can be imaged. The imaging device 61 images the bobbin 91 when the bobbin 91 is inserted. All of the bobbins 91 inserted onto the second bobbin holder 42 pass through the insertion end at least during insertion. Also, the mounting orientation does not change after the bobbin 91 is inserted. Accordingly, by imaging the bobbins 91 at the time of insertion and performing determination through the method of the above embodiment, it is possible to detect whether or not the insertion orientations of all of the bobbins 91 are appropriate.

In the fourth to sixth modified examples, the number of imaging devices 61 can be reduced, and therefore there is a possibility that lower cost and space saving can be achieved compared to the above embodiment.

## K. Modified Example 7

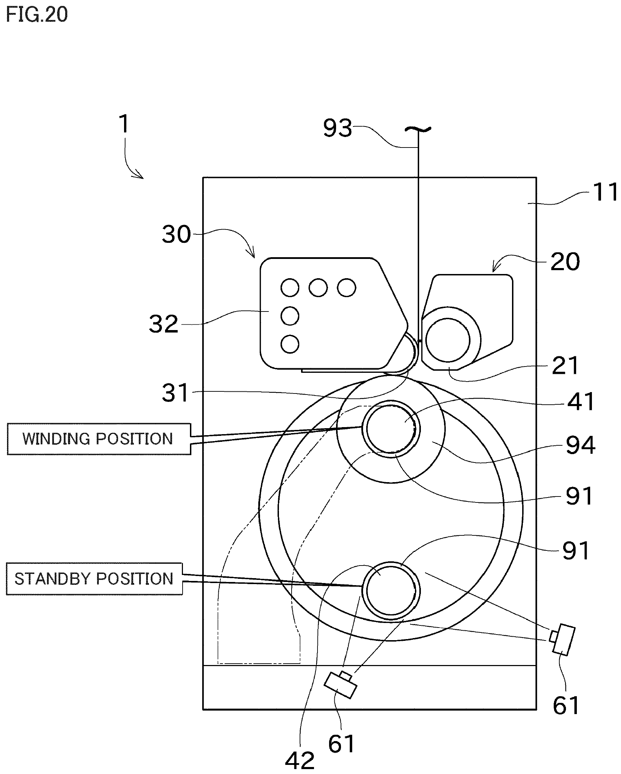

Next, a seventh modified example of the above embodiment will be described with reference to FIG. 20. FIG. 20 is a front view of the thread winding machine 1 of the seventh modified example.

In the above embodiment, the mounting state detection device 10 images the bobbins 91 from one direction to generate a bobbin image. Instead, in the seventh modified example, bobbin images are generated by imaging the bobbins 91 from two directions. For this reason, in the seventh modified example, the imaging devices 61 are arranged in different directions with respect to the bobbins 91.

In the seventh modification, bobbin images of various locations on the outer peripheral surface of the bobbin 91 can be created, and therefore the mounting states of the bobbins 91 can be detected with higher accuracy. In particular, even if the slit 91a is not formed on the entire circumference of the bobbin 91, the slit 91a can be detected with high accuracy.

The seventh modified example can be applied to any of the above embodiment and the fourth to sixth modified examples. Also, the bobbins 91 may be imaged from two directions by moving the imaging device 61.

As described above, the mounting state detection device 10 of the embodiment and the modified examples detects the mounting states of the bobbins 91 on the bobbin holders 41 and 42. The mounting state detection device 10 includes the imaging device 61, the training unit 50b, the storage unit 50d, and the determination unit 50c. The imaging device 61 images a range including the bobbins 91 to generate a bobbin image. The training unit 50b constructs an estimation model by performing machine learning using the bobbin image and the ranges of the bobbins 91 in the bobbin image as training data. The storage unit 50d stores the estimation model constructed by the training unit 50b. The determination unit 50c generates the ranges of the bobbins 91 based on the bobbin image generated by the imaging device 61 and the estimation model stored in the storage unit 50d, and determines the mounting states of the bobbins 91 based on the ranges of the bobbins 91.

By using machine learning, it is possible to give consideration to slight characteristics and tendencies regarding the mounting states of the bobbins 91, and therefore it is possible to accurately determine whether or not the bobbins 91 are mounted appropriately.

In the mounting state detection device 10 of the embodiment and modified examples described above, the slits 91a are formed in the bobbins 91. The storage unit 50d stores the correct mounting orientations of the bobbins 91. The training unit 50b constructs an estimation model by performing machine learning using the bobbin image and the ranges of the bobbins 91 and the ranges of the slits 91a in the bobbin image as training data. Based on the bobbin image and the estimation model stored in the storage unit 50d, the determination unit 50c generates the ranges of the bobbins 91 and the ranges of the slits 91a. The determination unit 50c determines whether or not the mounting orientations of the bobbins 91 are correct based on the ranges of the bobbins 91, the ranges of the slits 91a, and the correct mounting orientations of the bobbins 91 stored in the storage unit 50d.

By using machine learning, it is possible to accurately distinguish between the slits 91a and other similar objects, and therefore the mounting orientations of the bobbins 91 can be accurately determined.

In the mounting state detection device 10 of the above-described embodiment and modified examples, a plurality of bobbins 91 are arranged side by side in the bobbin holders 41 and 42. The storage unit 50d stores an appropriate range of the gap between adjacent bobbins 91. Based on the ranges of the plurality of bobbins 91 generated by the determination unit 50c and the appropriate range of the gap between adjacent bobbins 91 stored in the storage unit 50d, the determination unit 50c determines whether or not the gap between the adjacent bobbins 91 is within the appropriate range.

By using machine learning, the gap between adjacent bobbins 91 can be accurately distinguished from other similar objects, and therefore it is possible to accurately determine whether or not the gap between the bobbins 91 is within an appropriate range.

The mounting state detection device 10 of the above-described embodiment and modified examples includes a notification unit 65 that performs notification when the determination unit 50c determines that the mounting states of the bobbins 91 are abnormal.

As a result, the operator can be notified of the abnormality in the mounting states of the bobbins.

In the mounting state detection device 10 of the above-described embodiment and modified examples, the imaging device 61 images the range including the bobbins 91 after the start of the task of mounting the bobbins 91 on the bobbin holders 41 and 42 and before the start of the winding of the thread 93 by the thread winding machine 1.

This makes it possible to determine the mounting states of the bobbins before a problem occurs due to incorrect bobbin mounting.

In the mounting state detection device 10 of the above embodiment, a plurality of bobbins 91 are arranged side by side in the bobbin holders 41 and 42. A plurality of imaging devices 61 are arranged along the axial direction of the second bobbin holder 42. The imaging devices 61 generate bobbin images including one or more bobbins 91.

As a result, even if a plurality of bobbins 91 are arranged side by side in the bobbin holders 41 and 42, it is possible to accurately detect the mounting states of these bobbins 91 by using a plurality of imaging devices.

In the mounting state detection device 10 of the fourth modified example, a plurality of bobbins 91 are arranged side by side in the bobbin holders 41 and 42. One imaging device 61 generates a bobbin image including all of the bobbins 91.

As a result, even if a plurality of bobbins 91 are arranged side by side in the bobbin holders 41 and 42, it is possible to accurately detect the mounting states of these bobbins 91 while suppressing the number of imaging devices 61 by using a wide-angle imaging device 61 capable of imaging the plurality of bobbins 91 together.

In the mounting state detection device 10 of the fifth modified example, a plurality of bobbins 91 are arranged side by side in the bobbin holders 41 and 42. The imaging device 61 can travel along the axial direction of the second bobbin holder 42. After generating the bobbin image including the bobbin 91, the imaging device 61 travels to generate bobbin image including another bobbin 91.

As a result, even if a plurality of bobbins 91 are arranged side by side in the bobbin holders 41 and 42, it is possible to accurately detect the mounting states of these bobbins 91 while suppressing the number of imaging devices 61 by causing the imaging device 61 to travel along the axial direction of the second bobbin holder 42.

In the mounting state detection device 10 of the sixth modified example, a plurality of bobbins 91 are arranged side by side by inserting the bobbins 91 from the insertion ends of the bobbin holders 41 and 42 and sliding the bobbins 91. The imaging device 61 generates bobbin images for all the bobbins 91 by sequentially imaging the bobbins 91 inserted from the insertion ends.

As a result, even if a plurality of bobbins 91 are arranged side by side in the bobbin holders 41 and 42, it is possible to accurately detect the mounting states of these bobbins 91 while suppressing the number of imaging devices 61 by sequentially imaging the bobbins 91 when the bobbins 91 are inserted.

The mounting state detection device 10 of the seventh modified example includes a plurality of imaging devices 61. The imaging devices 61 image the bobbins 91 from a plurality of directions. The determination unit 50c determines the mounting states of the bobbins 91 based on a plurality of bobbin images imaged from a plurality of directions.

As a result, the determination is performed based on the result of imaging a wide range in the circumferential direction of the bobbins 91, and therefore the detection accuracy can be increased.

In the mounting state detection device 10 of the present embodiment, the imaging device 61 images the bobbins 91 a plurality of times while the bobbins 91 are rotated using the axial direction of the bobbin holders 41 and 42 as the center of rotation, thereby generating a plurality of bobbin images. The determination unit 50c determines the mounting state of the bobbin 91 based on a plurality of bobbin images for one bobbin 91.

As a result, the determination is performed based on the result of imaging the entire bobbin 91 in the circumferential direction, and therefore the detection accuracy can be increased.

Although a preferred embodiment of the present disclosure has been described above, the above configuration can be modified as follows, for example.

The flowcharts shown in the above embodiments are examples, and some of the processing may be omitted, the content of some of the processing may be changed, or new processing may be added.

Although the traverse device 21 of the above embodiment is of a cam drum type, it may have a different configuration as long as the traverse guide 23 can be moved back and forth in the winding width direction. For example, instead of the traverse device 21, a belt-type traverse device can be used.

## L. Supplementary Notes

As described above, the present embodiment includes the following disclosures.

According to the aspect of the present disclosure, a mounting state detection device having the following configuration is provided. That is, the mounting state detection device detects a mounting state of a bobbin on a bobbin holder of a thread winding machine. The mounting state detection device includes an imaging device, a training unit, a storage unit, and a determination unit. The imaging device images a range including the bobbin to generate a bobbin image. The training unit constructs an estimation model by performing machine learning using the bobbin image and the range of the bobbin in the bobbin image as training data. The storage unit stores the estimation model constructed by the training unit. The determination unit generates the range of the bobbin based on the bobbin image generated by the imaging device and the estimation model stored in the storage unit, and determines the mounting state of the bobbin based on the range of the bobbin.

By using machine learning, it is possible to give consideration to slight characteristics and tendencies regarding the mounting state of the bobbin, and therefore it is possible to accurately determine whether or not the bobbin is mounted appropriately.

It is preferable that the mounting state detection device described above has the following configuration. That is, a slit is formed in the bobbin. The storage unit stores the correct mounting orientation of the bobbin. The training unit constructs an estimation model by performing machine learning using the bobbin image and the range of the bobbin and the range of the slit in the bobbin image as training data. The determination unit generates the range of the bobbin and the range of the slit based on the bobbin image and the estimation model stored in the storage unit. The determination unit determines whether or not the mounting orientation of the bobbin is correct based on the range of the bobbin, the range of the slit, and the correct mounting orientation of the bobbin stored in the storage unit.

By using machine learning, it is possible to accurately distinguish between slits and other similar objects, and therefore the mounting orientation of the bobbin can be accurately determined.

It is preferable that the mounting state detection device described above has the following configuration. That is, a plurality of the bobbins are arranged side by side in the bobbin holder. The storage unit stores an appropriate range of a gap between the adjacent bobbins. It is preferable that the determination unit determines whether or not the gap between the adjacent bobbins is within an appropriate range based on the ranges of the plurality of bobbins generated by the determination unit and the appropriate range of the gap between the adjacent bobbins stored in the storage unit.

By using machine learning, it is possible to accurately distinguish between the gap between adjacent bobbins and other similar objects, and therefore it is possible to accurately determine whether or not the gap between the bobbins is within an appropriate range.

It is preferable that the mounting state detection device described above further includes a notification unit that performs notification when the determination unit determines that the mounting state of the bobbin is abnormal.

As a result, the operator can be notified of the abnormality in the mounting state of the bobbin.

In the mounting state detection device described above, it is preferable that the imaging device images the range including the bobbin after the start of a task of mounting the bobbin on the bobbin holder and before the start of thread winding by the thread winding machine.

This makes it possible to determine the mounting state of the bobbin before a problem occurs due to incorrect bobbin mounting.

It is preferable that the mounting state detection device described above has the following configuration. That is, a plurality of the bobbins are arranged side by side in the bobbin holder. A plurality of the imaging devices are arranged along the axial direction of the bobbin holder. The imaging devices generate the bobbin images including one or more of the bobbins.

As a result, even if a plurality of bobbins are arranged side by side in the bobbin holder, the mounting states of these bobbins can be accurately detected by using a plurality of imaging devices.

It is preferable that the mounting state detection device described above has the following configuration. That is, a plurality of the bobbins are arranged side by side in the bobbin holder. One imaging device generates the bobbin image including all of the bobbins.

As a result, even if a plurality of bobbins are arranged side by side in the bobbin holder, it is possible to accurately detect the mounting state of these bobbins while suppressing the number of imaging devices by using a wide-angle imaging device capable of imaging the plurality of bobbins together.

It is preferable that the mounting state detection device described above has the following configuration. That is, a plurality of the bobbins are arranged side by side in the bobbin holder. The imaging device can travel along the axial direction of the bobbin holder. After generating the bobbin image including the bobbin, the imaging device travels and generate the bobbin image including another bobbin.

As a result, even if a plurality of bobbins are arranged side by side in the bobbin holder, it is possible to accurately detect the mounting states of these bobbins while suppressing the number of imaging device by causing the imaging device to travel along the axial direction of the bobbin holder.

It is preferable that the mounting state detection device described above has the following configuration. That is, the plurality of bobbins are arranged side by side by inserting the bobbins from the insertion end of the bobbin holder and sliding the bobbins. The imaging device sequentially images the bobbins inserted from the insertion end to generate the bobbin images for all of the bobbins.

Thus, even if a plurality of bobbins are arranged side by side in the bobbin holder, it is possible to accurately detect the mounting states of these bobbins while suppressing the number of imaging devices by sequentially imaging the bobbins when the bobbins are inserted.

It is preferable that the mounting state detection device described above has the following configuration. That is, the mounting state detection device includes a plurality of the imaging devices. The imaging device images the bobbin from a plurality of directions. The determination unit determines the mounting state of the bobbin based on a plurality of bobbin images imaged from a plurality of directions.

Since the determination is performed based on the result of imaging a wide range in the circumferential direction of the bobbin, the detection accuracy can be increased.

It is preferable that the mounting state detection device described above has the following configuration. That is, the imaging device images the bobbin a plurality of times while the bobbin is rotating with the axial direction of the bobbin holder as a center of rotation, to generate a plurality of the bobbin images. The determination unit determines the mounting state of the bobbin based on the plurality of bobbin images for the one bobbin.

Since the determination is performed based on the result of imaging the entire bobbin in the circumferential direction, detection accuracy can be increased.

The embodiments disclosed herein are to be considered illustrative in all respects and not restrictive. The scope of the present invention is indicated not by the above description, but by the scope of the claims, and all modifications within the range and meaning equivalent to the scope of the claims are intended to be encompassed therein.

LIST OF REFERENCE NUMERALS

| | |
|---|---|
| 1 | Thread winding machine |
| 10 | Mounting state detection device |
| 50 | Control device |
| 50a | Control unit |
| 50b | Training unit |
| 50c | Determination unit |
| 61 | Imaging device |
| 65 | Notification unit |

124 Estimation model

**Claims**

1. A mounting state detection device (10) comprising:

   a control device (50); and
   an imaging device (61) configured to be able to image a bobbin mounted on a bobbin holder of a thread winding machine,
   wherein the control device (50)
   executes processing for acquiring an estimation model (124) generated by performing machine learning of a plurality of pieces of training data (123), each of the plurality of pieces of training data (123) associating a training bobbin image showing a bobbin with mounting state information representing a mounting state of the bobbin, as a label, and
   the control device (50) further executes

   processing for acquiring a determination bobbin image from the imaging device (61) by imaging the bobbin mounted on the bobbin holder, and
   processing for determining whether or not the bobbin is mounted normally on the bobbin holder based on the mounting state information output from the estimation model (124) by inputting the determination bobbin image to the estimation model (124).

2. The mounting state detection device (10) according to claim 1, wherein in the determining processing, a determination is made regarding whether or not a mounting orientation of the bobbin on the bobbin holder is normal.

3. The mounting state detection apparatus according to claim 2,

   wherein a slit is formed in the bobbin,
   the mounting state information serving as the label includes a bobbin range indicating a range of a bobbin in the training bobbin image and a slit range indicating a range of a slit in the training bobbin image,
   the estimation model (124) receives input of the determination bobbin image and outputs the bobbin range in the determination bobbin image and the slit range in the determination bobbin image as mounting state information, and
   a determination is made regarding whether or not the mounting orientation is normal based on a positional relationship between the bobbin range and the slit range output from the estimation model (124).

4. The mounting state detection device (10) according to claim 1,

   wherein a plurality of bobbins are arranged side by side on the bobbin holder, and
   in the determining processing, a determination is made regarding whether or not an interval between the bobbins included in the determination bobbin image is normal.

5. The mounting state detection device (10) according to claim 4,

   wherein the mounting state information serving as the label includes a bobbin range indicating a range of a bobbin in the training bobbin image, the estimation model (124) receives input of the determination bobbin image and outputs the bobbin range for each bobbin included in the determination bobbin image, and
   a determination is made regarding whether or not the interval is normal based on a positional relationship between adjacent bobbin ranges among the bobbin ranges output from the estimation model (124).

6. The mounting state detection device (10) according to any one of claims 1 to 5, wherein the control device (50) further executes processing for performing notification of a mounting abnormality of the bobbin if it is determined that the bobbin is not mounted normally on the bobbin holder.

7. The mounting state detection device (10) according to any one of claims 1 to 6, wherein the imaging device (61) images the bobbin after the start of a task of mounting the bobbin on the bobbin holder and before the start of thread winding by the thread winding machine.

8. The mounting state detection device (10) according to any one of claims 1 to 7,

   wherein a plurality of the bobbins are arranged side by side on the bobbin holder,
   a plurality of the imaging devices (61) are arranged along an axial direction of the bobbin holder, and
   the imaging device (61) generates the determination bobbin image including one or more of the bobbins.

9. The mounting state detection device (10) according to any one of claims 1 to 7,

   wherein a plurality of the bobbins are arranged side by side in the bobbin holder, and
   one imaging device (61) generates the determination bobbin image including all of the bobbins.

10. The mounting state detection device (10) according to any one of claims 1 to 7,

wherein a plurality of the bobbins are arranged side by side in the bobbin holder, the imaging device (61) is configured to be able to travel along an axial direction of the bobbin holder, and the imaging device (61) travels after generating the determination bobbin image including one of the bobbins, and generates the determination bobbin image including another of the bobbins.

11. The mounting state detection device (10) according to any one of claims 1 to 7,

wherein a plurality of the bobbins are arranged side by side by inserting the bobbins from an insertion end of the bobbin holder and sliding the bobbins, and the imaging device (61) sequentially images the bobbins inserted from the insertion end to generate the determination bobbin images for all of the bobbins.

12. The mounting state detection device (10) according to any one of claims 1 to 7,

wherein a plurality of the imaging devices (61) are included, the imaging devices (61) image the bobbin from a plurality of directions, and a determination is made regarding whether or not the bobbin is mounted normally on the bobbin holder based on a plurality of the determination bobbin images imaged from a plurality of directions.

13. The mounting state detection device (10) according to any one of claims 1 to 7,

wherein the imaging device (61) generates a plurality of the determination bobbin images by imaging the bobbin a plurality of times while the bobbin rotates using an axial direction of the bobbin holder as a center of rotation, and a determination is made regarding whether or not the bobbin is mounted normally on the bobbin holder based on a plurality of the determination bobbin images.

14. A mounting state detection method to be executed by a mounting state detection device (10),

wherein the mounting state detection device (10) includes an imaging device (61) configured to be able to image a bobbin mounted on a bobbin holder of a thread winding machine, the mounting state detection method comprising a step of acquiring an estimation model (124) generated by performing machine learning of a plurality of pieces of training data (123), each of the plurality of pieces of training data (123) associating a training bobbin image showing a bobbin with mounting state information representing a mounting state of the bobbin, as a label, and the mounting state detection method further comprising:

a step of acquiring a determination bobbin image from the imaging device (61) by imaging the bobbin mounted on the bobbin holder; and a step of determining whether or not the bobbin is mounted normally on the bobbin holder based on the mounting state information output from the estimation model (124) by inputting the determination bobbin image to the estimation model (124).

15. A mounting state detection program to be executed by a mounting state detection device (10),

wherein the mounting state detection device (10) includes an imaging device (61) configured to be able to image a bobbin mounted on a bobbin holder of a thread winding machine, the mounting state detection program causes the mounting state detection device (10) to execute a step of acquiring an estimation model (124) generated by performing machine learning of a plurality of pieces of training data (123), each of the plurality of pieces of training data (123) associating a training bobbin image showing a bobbin with mounting state information indicating a mounting state of the bobbin, as a label, and the mounting state detection program further causes the mounting state detection device (10) to execute:

a step of acquiring a determination bobbin image from the imaging device (61) by imaging the bobbin mounted on the bobbin holder; and a step of determining whether or not the bobbin is mounted normally on the bobbin holder based on the mounting state information output from the estimation model (124) by inputting the determination bobbin image into the estimation model (124).

FIG.1

WINDING POSITION

STANDBY POSITION

FIG.2

FIG.3

20  23  22  21  51  10  50

CONTROL
DEVICE

31  61  30

IMAGING
DEVICE

CONTROL
UNIT  50a

TRAINING
UNIT  50a

65  NOTIFICATION
UNIT

DETERMINATION
UNIT  50a

STORAGE
UNIT  50a

41  54

53

42  40  55

FIG.4

BOBBIN IMAGE
(INCLUDING SLIT)
———————————————→

CORRECT ANSWER DATA
INDICATING RANGES OF BOBBINS
AND SLITS IN BOBBIN IMAGE
———————————————→

TRAINING
UNIT 50a
(MACHINE
LEARNING)

⇒

ESTIMATION
MODEL

FIG.5

BOBBIN IMAGE
(INCLUDING SLIT)

ESTIMATION
MODEL

DETERMINATION
UNIT 50c

ESTIMATION DATA INDICATING
RANGES OF BOBBINS
AND SLITS IN BOBBIN IMAGE

FIG.6

FIRST SIDE    SECOND SIDE

AXIAL DIRECTION

FIG.7

```
                          ┌──────────┐
                          │  START   │
                          └──────────┘
                                │
                                ▼
                          ╱─────────────╲
      S101──────          ╱ BOBBIN MOUNTING ╲      No
                          ╲ STATE DETECTION  ╱─────────┐
                          ╲    TIMING?     ╱           │
                           ╲─────────────╱             │
                                │ Yes                  │
                                ▼                      │
      S102──────    ┌──────────────────────┐           │
                    │ INSTRUCT IMAGING DEVICES │        │
                    │    TO IMAGE BOBBINS   │           │
                    └──────────────────────┘           │
                                │                      │
                                ▼                      │
      S103──────  ┌─────────────────────────────────┐  │
                  │ ESTIMATE RANGES OF BOBBINS AND   │  │
                  │ RANGES OF SLITS IN BOBBIN IMAGE  │  │
                  │       USING ESTIMATION MODEL     │  │
                  └─────────────────────────────────┘  │
                                │                      │
                                ▼                      │
      S104──────          ╱─────────────╲    No    S105│
                          ╱   MOUNTING   ╲───────┐      │
                          ╲ STATES OF BOBBINS     │     │
                          ╲  APPROPRIATE?  ╱      ▼     │
                           ╲─────────────╱   ┌────────┐ │
                                │ Yes        │ NOTIFY │ │
                                │            │OPERATOR│ │
                                │            │   OF   │ │
                                │            │ABNORM- │ │
                                │            │ ALITY  │ │
                                │            └────────┘ │
                                │                │      │
                                └────────────────┴──────┘
```

FIG.8

FIG.9

<u>122</u>

| TRAINING BOBBIN IMAGE | MOUNTING STATE INFORMATION (LABEL) | | | | |
|---|---|---|---|---|---|
| | CLASSIFICATION INFORMATION | RANGE INFORMATION | | | |
| | | CENTER (x COORDINATE) | CENTER (y COORDINATE) | HORIZONTAL WIDTH | VERTICAL WIDTH |
| BOBBIN IMAGE A | 1 | cx1 | cy1 | w1 | h1 |
| | 2 | cx2 | cy2 | w2 | h2 |
| BOBBIN IMAGE B | 1 | cx3 | cy3 | w3 | h3 |
| . | . | . | . | . | . |

FIG.10

CONTROL DEVICE — 50

ESTIMATION MODEL — 124

TRAINING DATA SET — 122

TRAINING UNIT — 50b

DETERMINATION UNIT — 50c

DETERMINATION RESULT

BOBBIN IMAGE
(FROM IMAGING DEVICE 61)

FIG.11

EP 4 386 663 A1

# FIG.12

DETERMINATION BOBBIN IMAGE

ESTIMATION MODEL — 124

CLASSIFICATION MODEL — 125A

RANGE PREDICTION MODEL — 125B

CLASSIFICATION INFORMATION

SLIT
BOBBIN

DETERMINATION UNIT — 50c

DETERMINATION RESULT

RANGE INFORMATION

VERTICAL WIDTH h
HORIZONTAL WIDTH w
CENTER cy
CENTER cx

FIG.13

FIG.14

_122A_

| TRAINING BOBBIN IMAGE | MOUNTING STATE INFORMATION (LABEL) |
|---|---|
| | ABNORMALITY TYPE |
| BOBBIN IMAGE A | ABNORMALITY A |
| BOBBIN IMAGE B | ABNORMALITY B |
| · · · | · · · |

123A

123A

ABNORMALITY A : MOUNTING ORIENTATION ABNORMALITY

ABNORMALITY B : BOBBIN INTERVAL ABNORMALITY

FIG.15

ABNORMALITY A : MOUNTING ORIENTATION ABNORMALITY

ABNORMALITY B : BOBBIN INTERVAL ABNORMALITY

ESTIMATION MODEL — 124A

123A

P(1) → $x_1$

P(2) → $x_2$

P(N) → $x_N$

$h_{A1}$ ... $h_{L1}$

$h_{AQ}$ ... $h_{LR}$

$y_1$ → sa (ABNORMALITY A)

$y_2$ → sb (ABNORMALITY B)

BOBBIN IMAGE (TRAINING DATA)

X    H    Y

ESTIMATION RESULT

COMPARISON

sa' (ABNORMALITY A)

sb' (ABNORMALITY B)

123A

LABEL (TRAINING DATA)

50e

TRAINING UNIT

PARAMETER UPDATE

EP 4 386 663 A1

34

FIG.16

FIG.16

BOBBIN IMAGE

P(1)

P(2)

...

P(N)

ESTIMATION MODEL

124A

$x_1$  $x_2$  ...  $x_N$   X

$h_{A1}$ ... $h_{AQ}$

$h_{L1}$ ... $h_{LR}$   H

$y_1$  $y_2$   Y

ESTIMATION RESULT

sa (ABNORMALITY A)

sb (ABNORMALITY B)

50f

DETERMINATION UNIT

ABNORMALITY TYPE

ABNORMALITY A : MOUNTING ORIENTATION ABNORMALITY
ABNORMALITY B : BOBBIN INTERVAL ABNORMALITY

FIG.17

FIG.18

FIG.19

FIG.20

WINDING POSITION

STANDBY POSITION

Europäisches
Patentamt

European
Patent Office

Office européen
des brevets

# EUROPEAN SEARCH REPORT

Application Number

EP 23 20 9683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Operation Manual brother Sewing Machine Product Code: 888-N00/N02/N20/N22/N40/N42", , 20 September 2020 (2020-09-20), XP093155838, https://web.archive.org/web/20200920213945 /https://download.brother.com/welcome/doch 101975/888_n00_n02_n20_n22_n40_n42_om02en. pdf Retrieved from the Internet: URL:https://support.brother.com/g/b/manual top.aspx?c=us&lang=en&prod=hf_cs7000xeus | 1-3,6-15 | INV. G06T7/00  ADD. B65H69/06 |
| A | * pages 1,3,8 * ----- | 4,5 | |
| A | EP 3 581 532 A1 (TMT MACHINERY INC [JP]) 18 December 2019 (2019-12-18) * abstract, [0001-0119], claims 1-18 * ----- | 1-15 | |
| A | US 2022/254005 A1 (WILKINSON CALEB ROLAND [US] ET AL) 11 August 2022 (2022-08-11) * abstract, Figs. 13, [0115-0124] * ----- | 1-15 | |
| | | | TECHNICAL FIELDS SEARCHED (IPC)  G06T B65H |

The present search report has been drawn up for all claims

| Place of search | Date of completion of the search | Examiner |
|---|---|---|
| Munich | 26 April 2024 | Borotschnig, Hermann |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................
& : member of the same patent family, corresponding
document

EPO FORM 1503 03.82 (P04C01)

# EP 4 386 663 A1

## ANNEX TO THE EUROPEAN SEARCH REPORT
## ON EUROPEAN PATENT APPLICATION NO.

EP 23 20 9683

26-04-2024

| Patent document cited in search report | | Publication date | Patent family member(s) | | Publication date |
|---|---|---|---|---|---|
| EP 3581532 | A1 | 18-12-2019 | CN 110578177 | A | 17-12-2019 |
| | | | EP 3581532 | A1 | 18-12-2019 |
| | | | JP 7269783 | B2 | 09-05-2023 |
| | | | JP 2019214474 | A | 19-12-2019 |
| US 2022254005 | A1 | 11-08-2022 | CA 3133596 | A1 | 24-09-2020 |
| | | | CN 113711234 | A | 26-11-2021 |
| | | | GB 2597857 | A | 09-02-2022 |
| | | | US 2022254005 | A1 | 11-08-2022 |
| | | | WO 2020188452 | A1 | 24-09-2020 |

EPO FORM P0459

**REFERENCES CITED IN THE DESCRIPTION**

**Patent documents cited in the description**

- JP H497769 U